# EUROPEAN PATENT APPLICATION

(11) **EP 4 535 694 A1**
(43) Date of publication of application: **09.04.2025**
(21) Application number: 22948487.8
(22) Date of filing: 30.06.2022
(51) Int. Cl.: H04L 1/00

(54) **CODE BLOCK IDENTIFICATION METHOD AND APPARATUS**

(71) Applicant: Huawei Technologies Co., Ltd., Shenzhen, Guangdong 518129 (CN)
(72) Inventor: LI, Zhongxiao, Shenzhen, Guangdong 518129 (CN); LI, Rixin, Shenzhen, Guangdong 518129 (CN); ZHOU, Yongbo, Shenzhen, Guangdong 518129 (CN)
(74) Representative: Goddar, Heinz J.
(86) International application number: PCT/CN2022/102743
(87) International publication number: WO 2024/000378

(57) **Abstract**

Embodiments of this application provide a code block identification method and an apparatus, and relate to the communication field. The method includes: A communication apparatus may obtain a code block stream, and obtain an i^{th} code block, an (i-1)^{th} code block, and an (i+1)^{th} code block that are adjacent to each other in the code block stream. The communication apparatus may determine a to-be-identified bit pattern based on bit patterns corresponding to the three adjacent code blocks. The communication apparatus may determine the i^{th} code block as a start boundary code block based on the to-be-identified bit pattern and a template bit pattern. In this way, accuracy of boundary code block identification is improved.

## Description

### TECHNICAL FIELD

Embodiments of this application relate to the communication field, and in particular, to a code block identification method and an apparatus.

### BACKGROUND

In an Ethernet technology, a transmitter sends a client signal to a receiver in a form of code blocks. A bitstream sent by the transmitter includes a plurality of encapsulated frames, and each encapsulated frame includes a start code block, one or more data code blocks, and an end code block. After receiving the code block stream, the receiver searches for the start code block of each encapsulated frame, to determine a start location of the encapsulated frame and obtain data in the encapsulated frame.

### SUMMARY

Embodiments of this application provide a code block identification method and an apparatus. In the code block identification method, a start boundary code block may be determined based on a plurality of code blocks, to improve accuracy of determining the start boundary code block.

According to a first aspect, an embodiment of this application provides a code block identification method. The method includes: A communication apparatus obtains a code block stream, where the code block stream includes a plurality of code blocks. The communication apparatus determines a to-be-identified bit pattern, where the to-be-identified bit pattern includes a bit pattern corresponding to an (i-1)^{th} code block, a bit pattern corresponding to an i^{th} code block, and a bit pattern corresponding to an (i+1)^{th} code block, the (i-1)^{th} code block, the i^{th} code block, and the (i+1)^{th} code block belong to the plurality of code blocks, the i^{th} code block and the (i-1)^{th} code block are adjacent code blocks, and the i^{th} code block and the (i+1)^{th} code block are adjacent code blocks. The communication apparatus determines the i^{th} code block as a start boundary code block based on the to-be-identified bit pattern and a template bit pattern, where the template bit pattern includes a first bit pattern, a second bit pattern, and a third bit pattern, the bit pattern of the (i-1)^{th} code block conforms to the first bit pattern, the bit pattern of the i^{th} code block conforms to the second bit pattern, and the bit pattern of the (i+1)^{th} code block conforms to the third bit pattern. In this way, the communication apparatus may determine a boundary code block based on a plurality of consecutive code blocks, so that a boundary code can also be accurately located when a bit error occurs on the boundary code.

For example, the communication apparatus may be a transmitter, a receiver, or an intermediate device.

For example, the code block stream includes a plurality of encapsulated frames, and each encapsulated frame includes one start boundary code block, one or more data code blocks, and one end code block.

In a possible implementation, the first bit pattern indicates that a corresponding code block is a non-data code block and a non-error code block, the second bit pattern indicates that a corresponding code block is an error code block, and the third bit pattern indicates that a corresponding code block is a data code block. In this way, the communication apparatus may determine the start boundary code block based on the three specified types of code blocks. When a bit error occurs in an S code, for example, when the S code block is encoded into an E code block, the communication apparatus may still determine, based on bit patterns of adjacent code blocks of the E code block, that the E code block is the start boundary code block.

In a possible implementation, the first bit pattern includes a synchronization header of a first code block and a control block type field of a second code block, the first code block is a non-data code block, and the second code block is a non-error code block. In this way, the communication apparatus may identify, based on the first bit pattern, whether the (i-1)^{th} code block is a non-E code block and a non-D code block.

In a possible implementation, the second bit pattern includes a synchronization header and a control block type field of a third code block, and the third code block is an error code block. In this way, the communication apparatus may identify, based on the second bit pattern, whether the i^{th} code block is an E code block.

In a possible implementation, the third bit pattern includes a synchronization header of a fourth code block, and the fourth code block is a data code block. In this way, the communication apparatus may identify, based on the third bit pattern, whether the (i+1)^{th} code block is a D code block.

In a possible implementation, the bit pattern of the (i-1)^{th} code block includes a synchronization header and a control block type field of the (i-1)^{th} code block, the bit pattern of the i^{th} code block includes a synchronization header and a control block type field of the i^{th} code block, and the bit pattern of the (i+1)^{th} code block includes a synchronization header of the (i+1)^{th} code block. In this way, the communication apparatus may determine, based on specified bits in the (i-1)^{th} code block, the i^{th} code block, and the (i+1)^{th} code block, whether the to-be-identified bit pattern conforms to the template bit pattern.

In a possible implementation, the bit pattern of the (i-1)^{th} code block includes the synchronization header and the control block type field of the (i-1)^{th} code block, the bit pattern of the i^{th} code block includes the synchronization header and the control block type field of the i^{th} code block, and the bit pattern of the (i+1)^{th} code block includes the synchronization header and four least significant bytes of the (i+1)^{th} code block. In this way, when an interface complies with a CL49 encoding rule, the communication apparatus may add a bit pattern of a fourth byte, to avoid misjudgment, and further improve accuracy of boundary code identification.

In a possible implementation, the determining the i^{th} code block as a first boundary code block based on the to-be-identified bit pattern and a template bit pattern includes: comparing the to-be-identified bit pattern with the template bit pattern, to obtain a quantity of inconsistent bits; and if the quantity of inconsistent bits is less than or equal to a preset threshold, determining the i^{th} code block as the first boundary code block. In this way, the communication apparatus may obtain the quantity of inconsistent bits by comparing corresponding bits in the to-be-identified bit pattern with corresponding bits in the template bit pattern one by one, to determine, based on the quantity of inconsistent of bits, whether the to-be-identified bit pattern conforms to the template bit pattern.

In a possible implementation, the comparing the to-be-identified bit pattern with the template bit pattern, to obtain a quantity of inconsistent bits includes: comparing the bit pattern of the (i-1)^{th} code block with the first bit pattern, comparing the bit pattern of the i^{th} code block with the second bit pattern, and comparing the bit pattern of the (i+1)^{th} code block with the third bit pattern. In this way, the communication apparatus may compare a bit pattern of a code block with a corresponding bit in the template bit pattern, to detect whether the to-be-identified bit pattern conforms to the template bit pattern.

In a possible implementation, a first code block stream complies with a CL82 encoding rule.

In a possible implementation, a first code block stream complies with a CL82 encoding rule.

In a possible implementation, after the determining the i^{th} code block as a first boundary code block based on the to-be-identified bit pattern and a template bit pattern, the method further includes: determining a target code group from the code block stream based on the i^{th} code block, where the i^{th} code block is a start boundary code block in the target code group. In this way, after correctly identifying the start boundary code block, the communication apparatus may obtain a corresponding code group, namely, an encapsulated frame described in the following embodiment, and extract corresponding data in the encapsulated frame.

According to a second aspect, an embodiment of this application provides a communication apparatus. The apparatus includes: one or more processors; a memory; and one or more computer programs, where the one or more computer programs are stored in the memory; and when the computer program is executed by the one or more processors, the communication apparatus is enabled to perform the following steps: obtaining a code block stream, where the code block stream includes a plurality of code blocks; determining a to-be-identified bit pattern, where the to-be-identified bit pattern includes a bit pattern corresponding to an (i-1)^{th} code block, a bit pattern corresponding to an i^{th} code block, and a bit pattern corresponding to an (i+1)^{th} code block, the (i-1)^{th} code block, the i^{th} code block, and the (i+1)^{th} code block belong to the plurality of code blocks, the i^{th} code block and the (i-1)^{th} code block are adjacent code blocks, and the i^{th} code block and the (i+1)^{th} code block are adjacent code blocks; and determining the i^{th} code block as a start boundary code block based on the to-be-identified bit pattern and a template bit pattern, where the template bit pattern includes a first bit pattern, a second bit pattern, and a third bit pattern, a bit pattern of the (i-1)^{th} code block conforms to the first bit pattern, a bit pattern of the i^{th} code block conforms to the second bit pattern, and a bit pattern of the (i+1)^{th} code block conforms to the third bit pattern.

In a possible implementation, the first bit pattern indicates that a corresponding code block is a non-data code block and a non-error code block, the second bit pattern indicates that a corresponding code block is an error code block, and the third bit pattern indicates that a corresponding code block is a data code block.

In a possible implementation, the first bit pattern includes a synchronization header of a first code block and a control block type field of a second code block, the first code block is a non-data code block, and the second code block is a non-error code block.

In a possible implementation, the second bit pattern includes a synchronization header and a control block type field of a third code block, and the third code block is an error code block.

In a possible implementation, the third bit pattern includes a synchronization header of a fourth code block, and the fourth code block is a data code block.

In a possible implementation, the bit pattern of the (i-1)^{th} code block includes a synchronization header and a control block type field of the (i-1)^{th} code block, the bit pattern of the i^{th} code block includes a synchronization header and a control block type field of the i^{th} code block, and the bit pattern of the (i+1)^{th} code block includes a synchronization header of the (i+1)^{th} code block.

In a possible implementation, the bit pattern of the (i-1)^{th} code block includes the synchronization header and the control block type field of the (i-1)^{th} code block, the bit pattern of the i^{th} code block includes the synchronization header and the control block type field of the i^{th} code block, and the bit pattern of the (i+1)^{th} code block includes the synchronization header and four least significant bytes of the (i+1)^{th} code block.

In a possible implementation, when the computer program is executed by the one or more processors, the communication apparatus is enabled to perform the following steps: comparing the to-be-identified bit pattern with the template bit pattern, to obtain a quantity of inconsistent bits; and if the quantity of inconsistent bits is less than or equal to a preset threshold, determining the i^{th} code block as the first boundary code block.

In a possible implementation, when the computer program is executed by the one or more processors, the communication apparatus is enabled to perform the following steps: comparing the bit pattern of the (i-1)^{th} code block with the first bit pattern, comparing the bit pattern of the i^{th} code block with the second bit pattern, and comparing the bit pattern of the (i+1)^{th} code block with the third bit pattern.

In a possible implementation, a first code block stream complies with a CL82 encoding rule.

In a possible implementation, a first code block stream complies with a CL82 encoding rule.

In a possible implementation, when the computer program is executed by the one or more processors, the communication apparatus is enabled to perform the following step: determining a target code group from the code block stream based on the i^{th} code block, where the i^{th} code block is a start boundary code block in the target code group.

According to a third aspect, an embodiment of this application provides an identification method. The method includes: A communication apparatus obtains a client stream, where the client stream includes a plurality of characters. The communication apparatus determines a to-be-identified bit pattern, where the to-be-identified character pattern includes a bit pattern corresponding to an (i-1)^{th} character, a bit pattern corresponding to an i^{th} code block, and a bit pattern corresponding to an (i+1)^{th} code block. The (i-1)^{th} character, the i^{th} character, and the (i+1)^{th} character belong to the client stream, the i^{th} character and the (i-1)^{th} character are adjacent characters, and the i^{th} character and the (i+1)^{th} character are adjacent characters. The communication apparatus determines the (i+1)^{th} character as a start boundary character based on the to-be-identified bit pattern and a template bit pattern. The template bit pattern includes a first bit pattern, a second bit pattern, and a third bit pattern, a bit pattern of the (i-1)^{th} character conforms to the first bit pattern, a bit pattern of the i^{th} character conforms to the second bit pattern, and a bit pattern of the (i+1)^{th} character conforms to the third bit pattern.

In a possible implementation, the first bit pattern indicates that a corresponding character is a leading character, the second bit pattern indicates that a corresponding character is an SFD character, and a third bit pattern indicates that a corresponding character is a non-SFD character.

According to a fourth aspect, this application provides a communication apparatus, configured to perform the method in any one of the first aspect or the possible implementations of the first aspect. The communication apparatus includes a corresponding unit that performs the method in any one of the first aspect or the possible implementations of the first aspect.

For example, the communication apparatus may include a transceiver unit and a processing unit.

According to a fifth aspect, this application provides a communication apparatus. The communication apparatus includes a processor, configured to perform the method described in any one of the first aspect or the possible implementations of the first aspect.

In a process of performing the foregoing method, a process of receiving a code block (or a code block stream) and the like in the foregoing method may be understood as a process of receiving an input code block (or a code block stream) by a processor. When the processor receives the input code block (or the code block stream), a transceiver receives the code block (or the code block stream), and inputs the code block (or the code block stream) into the processor. Further, after the transceiver receives the code block (or the code block stream), other processing may need to be performed on the code block (or the code block stream) before the code block is input into the processor.

Operations such as transmitting, sending, and receiving related to the processor may be more generally understood as operations such as output and receiving or input of the processor, instead of operations such as transmitting, sending, and receiving directly performed by a radio frequency circuit and an antenna, unless otherwise specified, or provided that the operations do not contradict actual functions or internal logic of the operations in related descriptions.

In an implementation process, the processor may be a processor specially configured to perform these methods, or may be a processor that executes computer instructions in a memory to perform these methods, for example, a general-purpose processor. The memory may be a non-transitory (non-transitory) memory, for example, a read-only memory (Read-Only Memory, ROM). The memory and the processor may be integrated on a same chip, or may be separately disposed on different chips, a type of the memory and a manner of disposing the memory and the processor are not limited in embodiments of this application.

In a possible implementation, the memory is located outside the communication apparatus.

In a possible implementation, the memory is located inside the communication apparatus.

In this embodiment of this application, the processor and the memory may alternatively be integrated into one component. In other words, the processor and the memory may alternatively be integrated together.

In a possible implementation, the communication apparatus further includes a transceiver, and the transceiver is configured to receive a signal and/or send a signal.

For example, the transceiver may be configured to receive a code block stream and the like.

According to a sixth aspect, this application provides a communication apparatus. The communication apparatus includes a logic circuit and an interface. The logic circuit is coupled to the interface. The interface is configured to obtain a code block stream (which may also be referred to as an input code block stream). The logic circuit is configured to determine a to-be-identified bit pattern, and determine a start boundary code block based on the to-be-identified bit pattern and a template bit pattern.

It may be understood that, for a specific implementation of the logic circuit, refer to an apparatus embodiment and the like shown below. Details are not described herein. For descriptions of a first code block, the to-be-identified bit pattern, the template bit pattern, and the like, refer to other embodiments of this application. Details are not described herein.

According to a seventh aspect, this application provides a computer-readable storage medium. The computer-readable storage medium is configured to store a computer program. When the computer program is run on a computer, the method in any one of the first aspect or the possible implementations of the first aspect is performed.

For example, when the computer program is run on a communication apparatus (for example, a receiver), the method in any one of the first aspect or the possible implementations of the first aspect is performed.

According to an eighth aspect, this application provides a computer program product. The computer program product includes a computer program or computer code. When the computer program or the computer code is run on a computer, the method in any one of the first aspect or the possible implementations of the first aspect is performed.

According to a ninth aspect, this application provides a computer program. When the computer program is run on a computer, the method in any one of the first aspect or the possible implementations of the first aspect is performed.

### BRIEF DESCRIPTION OF DRAWINGS

FIG. 1 is a diagram of a communication system based on a flexible Ethernet protocol according to an embodiment of this application;
FIG. 2 is a diagram of an MTN network architecture according to an embodiment of this application;
FIG. 3 is a diagram of another MTN network architecture according to an embodiment of this application;
FIG. 4 is a diagram of a relationship between a first path and a second path according to an embodiment of this application;
FIG. 5a shows definitions of different code types of a CL82 encoded code block according to an embodiment of this application;
FIG. 5b is a diagram of a structure of a code group according to an embodiment of this application;
FIG. 5c is a diagram of an overhead format according to an embodiment of this application;
FIG. 5d is a diagram of an encapsulation process of a code group according to an embodiment of this application;
FIG. 5e is a diagram of a bitstream according to an embodiment of this application;
FIG. 6a shows definitions of different code types of a CL49 encoded code block according to an embodiment of this application;
FIG. 6b is a diagram of a structure of a code group according to an embodiment of this application;
FIG. 7a shows definitions of different code types of an 8B/10B code block according to an embodiment of this application;
FIG. 7b is a diagram of a structure of a code group according to an embodiment of this application;
FIG. 8 is a flowchart of interaction between devices according to an embodiment of this application;
FIG. 9 is a diagram of processing of an intermediate device according to an embodiment of this application;
FIG. 10A and FIG. 10B are a schematic flowchart of a code block identification method according to an embodiment of this application;
FIG. 11 is a diagram of frame searching using a sliding window according to an embodiment of this application;
FIG. 12a is a diagram of a structure of a template bit pattern according to an embodiment of this application;
FIG. 12b is a diagram of a structure of a template bit pattern according to an embodiment of this application;
FIG. 12c is a diagram of a structure of a template bit pattern according to an embodiment of this application;
FIG. 13a is a diagram of a structure of a template bit pattern according to an embodiment of this application;
FIG. 13b is a diagram of a structure of a template bit pattern according to an embodiment of this application;
FIG. 13c is a diagram of a structure of a template bit pattern according to an embodiment of this application;
FIG. 14 is a schematic flowchart of a code block identification method according to an embodiment of this application;
FIG. 15 is a diagram of comparison between a template bit pattern and a to-be-identified bit pattern according to an embodiment of this application;
FIG. 16 is a diagram of processing of an intermediate device according to an embodiment of this application;
FIG. 17 is a diagram of sliding window in a specified search window according to an embodiment of this application;
FIG. 18a is a diagram of an enhanced error correction framing manner according to an embodiment of this application;
FIG. 18b is a diagram of an enhanced error correction framing manner according to an embodiment of this application;
FIG. 19 is a diagram of a code type of an LF code block according to an embodiment of this application;
FIG. 20 is a diagram of a structure of a template bit pattern according to an embodiment of this application; and
FIG. 21 and FIG. 22 are diagrams of structures of communication apparatuses according to embodiments of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not indicate a particular order of the objects. For example, a first target object, a second target object, and the like are used for distinguishing between different target objects, but are not used for describing a specific order of the target objects.

In embodiments of this application, the terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. To be precise, use of the word such as "example" or "for example" is intended to present a relative concept in a specific manner.

In the description of embodiments of this application, unless otherwise stated, "a plurality of" means two or more than two. For example, a plurality of processing units mean two or more processing units; and a plurality of systems mean two or more systems.

The following describes in detail terms in this application.

### 1. Flexible Ethernet (flexible Ethernet, FlexE)

Flexible Ethernet (flexible Ethernet, FlexE), released in the optical interworking forum (optical internet forum, OIF), is a general technology that supports different Ethernet media access control (media access control, MAC) layer rates. FlexE introduces the concept of flexible Ethernet bonding group (also referred to as a FlexE group or referred to as a bonding group for short). The bonding group may be formed by bonding one or more physical layer devices (which may also be considered as physical link interfaces, denoted as PHYs). Bandwidth resources corresponding to one bonding group are a sum of bandwidth resources corresponding to PHYs in the bonding group. Therefore, based on the bonding group, FlexE can satisfy a higher transmission rate and a higher transmission bandwidth.

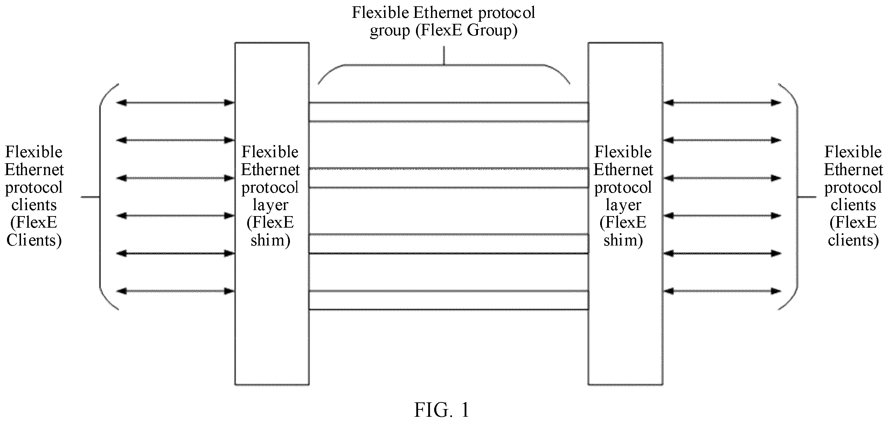

FIG. 1 is an example diagram of a communication system based on a flexible Ethernet protocol. In FIG. 1, an example in which one bonding group includes four PHYs is used. In the FlexE, a bandwidth resource of each PHY is divided into a plurality of slots in a time division multiplexing (time division multiplexing, TDM) manner, to implement hard isolation for transmission pipe bandwidth. A flexible Ethernet client (FlexE Client) represents a service stream transmitted in a slot (one or more slots) specified on a bonding group, one bonding group may carry a plurality of flexible Ethernet clients, one flexible Ethernet client corresponds to one service stream (which may typically be referred to as a media access control (media access control, MAC) Client), and a flexible Ethernet function layer (also referred to as FlexE shim) provides data adaptation and conversion from the flexible Ethernet client to the MAC client.

The FlexE may support functions including bonding implemented by bonding a plurality of PHYs, sub-rate, and channelization. For example, in the FlexE, a plurality of 100 gigabit Ethernet (gigabit Ethernet, GE) PHY ports may be bonded, and each 100 GE port may be divided into 20 slots in time domain at a granularity of 5G. The FlexE may support services at different Ethernet MAC rates. For example, a 2×100 GE bonding group supports a 200G MAC service. To be specific, in the FlexE, a plurality of Ethernet ports may be bonded into one bonding group (group) to support a MAC service whose rate is greater than that of a single Ethernet port. In other words, the FlexE supports the bonding function. For another example, transmission of a 50G MAC service in a 100 GE bonding group is supported. To be specific, a MAC service whose rate is less than a bandwidth of the bonding group or less than a bandwidth of a single Ethernet port is supported by allocating a slot. In other words, the FlexE supports the sub-rate function. For another example, a 2×100 GE bonding group supports simultaneous transmission of one 150G service and two 25G MAC services. To be specific, simultaneous transmission of a plurality of MAC services in the bonding group is supported by allocating a slot to the service. In other words, the FlexE supports the channelization function.

It can be learned that in FlexE, a plurality of service streams may be transmitted in parallel by using the bonding group, and service data of a same service stream may be carried on one PHY in the bonding group, or may be carried on different PHYs in the bonding group. In other words, service data of a same service stream may be transmitted to a peer end by using one PHY in the bonding group, or may be transmitted to a peer end by using a plurality of PHYs in the bonding group. A bandwidth resource of one PHY is usually divided into a plurality of slots. In actual use, a code block stream corresponding to a service may be allocated to a corresponding slot based on a slot configuration table. It may be understood that the bandwidth resource of one PHY shown herein is usually divided into a plurality of slots, and the slot may be understood as a second slot.

It may be understood that the bonding group described in this application may also be referred to as a link group or the like, and the service stream described in this application may also be referred to as a data stream or the like. Names thereof are not limited in this application. It may be understood that the service stream described herein may also be understood as a client signal or the like shown below.

### 2. Metro transport network (metro transport network, MTN)

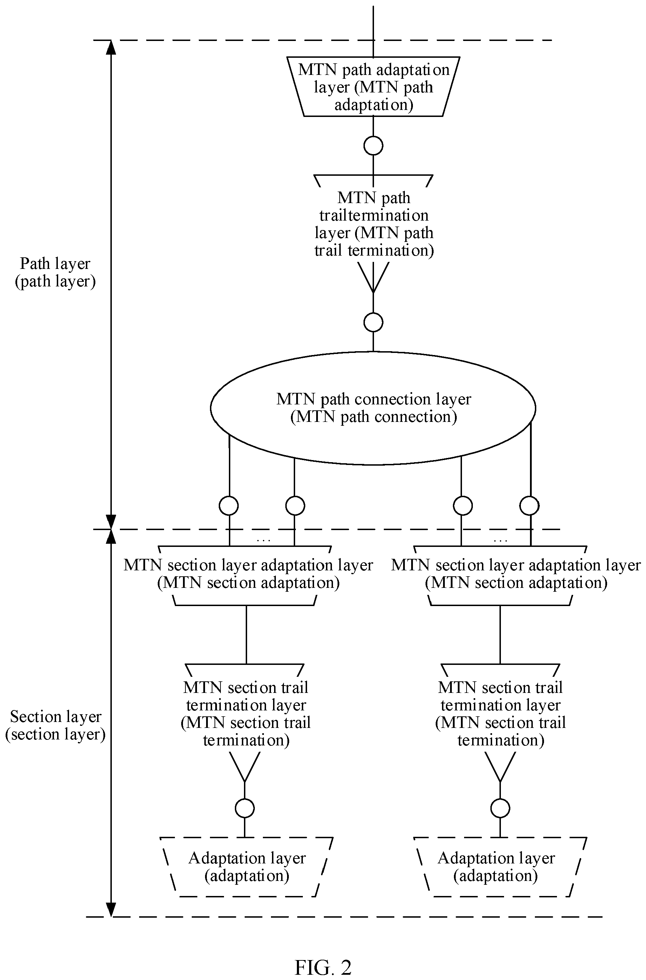

The MTN is a next-generation transport network technology system defined by the International Telecommunication Union (telecommunication standardization sector of ITU, ITU-T) for new service requirements such as 5G by inheriting the design logic of FlexE. For example, as shown in FIG. 2, the MTN may include an MTN path layer (MTN path layer) and an MTN section layer (MTN section layer). The MTN path layer includes an MTN path adaptation (MTN path adaptation) layer, an MTN path trail termination (MTN path trail termination) layer, an MTN path connection (MTN path connection) layer, and the like. The MTN section layer includes an MTN section adaptation (MTN section adaptation) layer and an MTN section trail termination (MTN section trail termination) layer. Optionally, the MTN section layer may further include an adaptation (adaptation) layer.

It may be understood that the MTN path adaptation layer, the MTN path trail termination layer, the MTN path connection layer, the MTN section trail termination layer, or the like may also have another name. For example, the MTN path adaptation layer may also be referred to as an MTN path adaptation function module. This is not limited in this application. It may be understood that for descriptions of the bonding group in the MTN, refer to descriptions of the bonding group in the FlexE. Details are not described herein.

For example, a service stream obtained by a transmitter may pass through a MAC layer, enter the MTN path adaptation layer in an MTN domain to be adapted into a form of a 64B/66B code block stream. After the 64B/66B code block stream enters the MTN path trail termination layer, path layer operations, administration, and maintenance (operations, administration, and maintenance, OAM) information is inserted into the 64B/66B code block stream, where the OAM information includes a bit interleaved parity (bit interleaved parity, BIP) result. Then, the transmitter may perform path forwarding over the MTN path connection (MTN path connection) layer, that is, determine a correspondence between an ingress port and an egress port at the MTN path connection layer, to determine an egress port. The MTN section adaptation (MTN section adaptation) layer has a path layer-section layer adaption function, and MAC service streams (for example, in a form of 64B/66B code blocks) may be interleaved at the MTN section adaptation layer, to form one 64B/66B code block stream. Then, the 64B/66B code block stream enters a physical layer for transmission over the MTN section trail termination (MTN section trail termination) layer, the adaptation (adaptation) layer, and the like. For example, functions such as scrambling, lane distribution, alignment marker (alignment marker, AM) insertion, and the like may be further performed on the 64B/66B code block stream.

On the contrary, after a receiver receives the 64B/66B code block stream, a stream direction of the 64B/66B code block stream received by the receiver is opposite to a stream direction of the 64B/66B code block stream sent by the transmitter. For example, the 64B/66B code block stream received by the receiver may sequentially pass through, for example, the MTN section layer and the MTN path layer.

Roughly from the perspective of a protocol stack, the MTN section layer is functionally similar to the OIF FlexE shim. A current version of the MTN section layer reuses and is compatible with the FlexE. A frame format of the current version of the MTN section layer retains a FlexE frame format. It may be understood that, for specific descriptions of the MAC layer, a reconciliation sublayer (reconciliation sublayer, RS), physical coding sublayer encode/decode (PCS encode/decode), and the like, refer to an Ethernet model in IEEE 802.3.

### 3. MTN flexible fine granularity (fine granularity, fg) layer

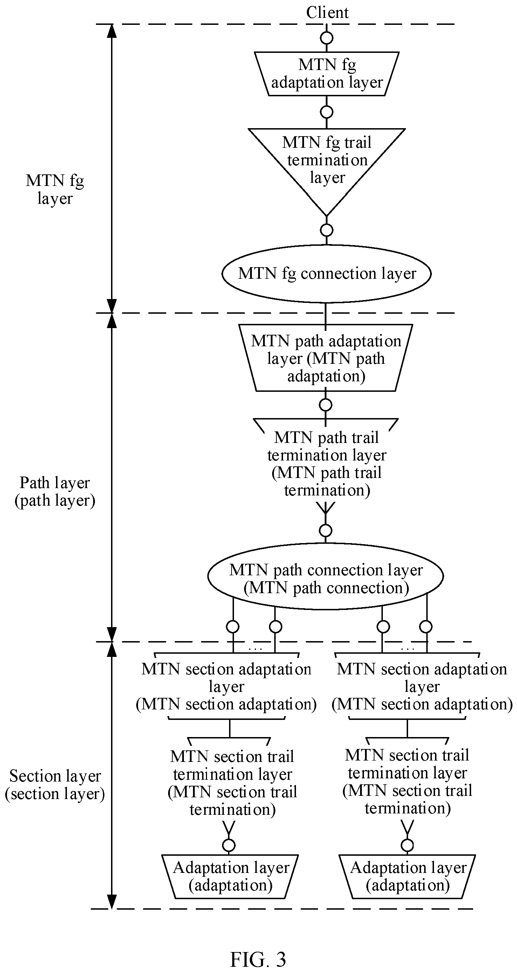

In FIG. 3, client (Client) signals pass through an MTN fg adaptation layer to form a code group stream. When the code group stream passes through an MTN fg trail termination layer, the code group stream may be inserted with OAM information or the like (which may also be understood as being inserted with overhead information). Then, the transmitter determines a correspondence between an ingress port and an egress port at an MTN fg connection layer, to determine an egress port. For example, at the MTN fg layer, for example, the MTN fg trail termination layer, the code group stream may be transmitted over a first path. Then, at the MTN path layer, for example, the MTN path adaptation layer, one or more first paths may multiplex one or more first slots obtained through division from a second path. At the MTN path trail termination layer, overhead information such as OAM may be inserted into one second path, and at the MTN section adaptation layer, one or more second paths multiplex one or more second slots obtained through division from the bonding group. That is, at the MTN section layer, one second path may be mapped to one or more second slots. It may be understood that for specific descriptions of the MTN path layer and the MTN section layer, refer to FIG. 2. Details are not described herein again.

In this application, a code group is encapsulated in a form of a code block. Therefore, when a code group stream passes through the MTN path layer and the MTN section layer, the MTN path layer and the MTN section layer sense a code block stream, and then the code block stream is sent to a link over the physical layer.

After receiving the code block stream, the receiver may demultiplex the second path from the one or more second slots in the bonding group through the MTN section adaptation layer. In addition, the receiver demultiplexes the first path from the one or more first slots in the second path through the MTN path adaptation layer. Therefore, the receiver may restore a client signal stream from the first path at the MTN fg layer. It may be understood that, because a stream direction of the client signal stream obtained by the receiver is opposite to a stream direction of the client signal stream sent by the transmitter, for a specific manner in which the receiver obtains the client signal stream, refer to descriptions of sending the code block stream by the transmitter. Details are not described herein again.

### 4. First slot

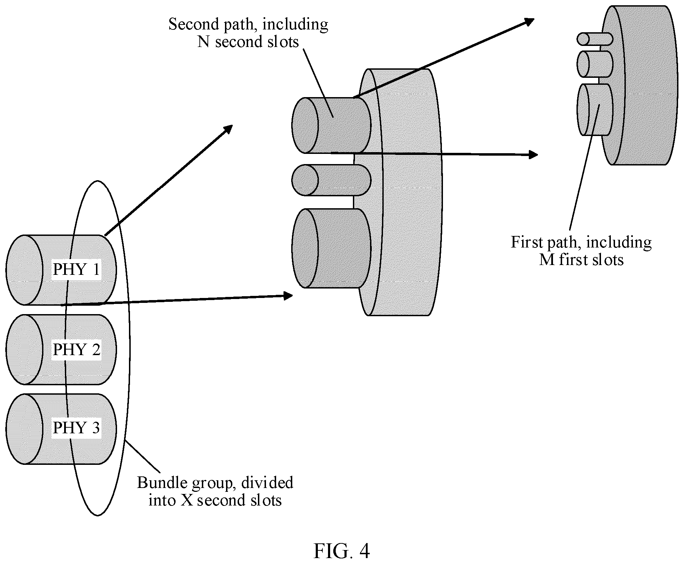

It can be learned from the foregoing descriptions that a slicing packet network (slicing packet network, SPN), an MTN, or the like provides a hard pipe based on a bandwidth of n×5 Gbps, where n is a positive integer. However, for some services, the pipe bandwidth granularity of 5 Gbps is still excessively large. To resolve the problem that the pipe bandwidth granularity is excessively large, this application further provides a fine granularity pipe. As shown in FIG. 4, based on a 5 Gbps pipe, according to a method provided in this application, slot division may be further performed based on 5 Gbps, for example, a slot of 5 Gbps is divided into 480 slots of 10 Mbps. In this case, for example, one 10 Mbps slot may correspond to one client signal, or a plurality of 10 Mbps slots may correspond to one client signal. This is not limited in this application. 5 Gbps shown herein may be further understood as a second slot. In other words, the second slot may be divided into a plurality of (for example, M) first slots. As shown above, the second slot may be divided into 480 first slots. It may be understood that the first slot may include not only 10 Mbps, but also 100 Mbps, 7.5 Mbps, 5 Mbps, 2.5 Mbps, or the like, and the second slot may include not only 5 Gbps, but also 10 Gbps, 25 Gbps, or the like. This is not limited in this application. It may be understood that, in a specific implementation, there may be deviation in a bandwidth of each slot described in this application. Therefore, a specific value of a bandwidth of the first slot or a specific value of a bandwidth of the second slot is not limited in this application. For example, when the bandwidth of the first slot is 10 Mbps, in a specific implementation, the bandwidth of the first slot may alternatively be 10.1 Mbps or 10.2 Mbps.

In a possible implementation, the first path may alternatively be carried in a PHY link. For example, a PHY 1 link may be divided into a plurality of fine granularity pipes. This is not limited in this application. In this example, the PHY 1 link is equivalent to an upper-level path of the first path. In the example shown in FIG. 4, a second path is the upper-level path of the first path.

The following describes in detail the bonding group, the first slot, and the second slot in this application.

In this application, the bonding group may be formed by bonding one or more PHYs, and bandwidths of the bonding group are a sum of bandwidths of the one or more PHYs. Further, the bonding group may be divided into X second slots. The second path may include N second slots in the X second slots, and the second path may be divided into Y first slots. The first path may include M first slots in the Y first slots. N is less than or equal to X, M is less than or equal to Y, and M, N, X, and Y are all integers greater than or equal to 1.

In other words, in this application, the first path includes M first slots, the M first slots are included in the second path, the second path includes N second slots, the N second slots are included in the bonding group, and the bonding group includes one or more PHY links. The second path is divided into Y first slots, the M first slots are included in the Y first slots, the bonding group is divided into X second slots, and the N second slots are included in the X second slots. Optionally, the bandwidth of the first slot in this application may be 10 Mbps×K, where K is an integer greater than or equal to 1, and K is less than or equal to 2048.

The first path may be understood as a path for transmission of a code group, and the second path may be understood as a path for transmission of a code block. When transmitting the code group, the first path may multiplex the M first slots in the Y first slots obtained through division from the second path. In other words, a slot granularity of the first path described in this application is smaller, and a transport network technology has a smaller and more flexible slot granularity than the MTN. For example, the first path may be used to transmit a private line service. For another example, the first path may be used for transmission of one or more different client signals. It may be understood that the first path may be used for transmission of the code group (for example, a first code group) described in this application, and the code group may be transparently transmitted in the MTN network.

For example, as shown in FIG. 4, one PHY in the bonding group may include three second paths, and second slots included in the second path are included in the bonding group. One second path may include three first paths, for example, M first slots included in the first path are included in the second path. It may be understood that FIG. 4 is merely an example, and should not be understood as a limitation on this application.

In this application, the first path may also be referred to as an fgBU path (or an MTN fg path), a flexible fine granularity path (or a fine granularity path), a low-order path, or the like, while the second path may be further referred to as a large-granularity path, a high-order path, or the like. Names thereof are not limited in this application.

### 5. Code block (block)

A P1B/P2B code block, which is an encoding scheme, may also be referred to as a P1B/P2B bit block (bit block), a P1B/P2B block, a P1B/P2B encoded block, a P1B/P2B bitstream, a P1/P2 (or P1b/P2b) bit block, or the like. P1 represents a quantity of payload bits in a code block (or a bit block), P2 represents a total quantity of bits in the code block, (P2-P1) represents a quantity of synchronization header bits in the code block, P1 and P2 are positive integers, and P2 is greater than P1. For example, the P1B/P2B code block may be an 8B/10B code block, a 64B/66B code block, a 128B/130B code block, or a 256B/258B code block. Specific values of P1 and P2 are not limited in this application.

The 64B/66B code block is used as an example below to describe the method provided in this application. It may be understood that the 64B/66B code block described below may also be replaced with a 64B/66B bit block, a 64/66 code block, a 64/66 bit block, a 64b/66b code block, a 64b/66b bit block, a 64B/66B bit block stream, a 64B/66B encoded block, or the like.

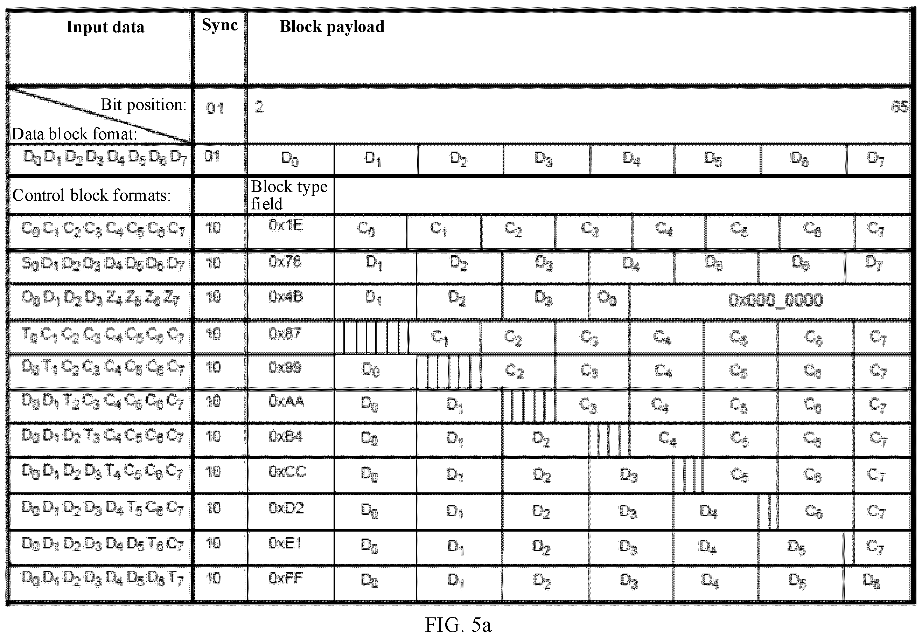

For example, FIG. 5a shows definitions of different code types of a 64B/66B code block. As shown in FIG. 5a, two bits (namely, a 0^{th} bit and a 1^{st} bit) of a header are synchronization header bits. A value is "10" or "01". The last 64 bits (a 2^{nd} bit to a 65^{th} bit) are payload bits for carrying payload data and the like. In FIG. 5a, each row represents a definition of a code type, where D0 to D7 represent a data byte, C0 to C7 represent a control byte, S0 represents a start of a MAC frame, and T0 to T7 represent an end of the MAC frame.

In different code blocks shown in FIG. 5a, in the case that the synchronization header bits are 0b10, a corresponding code block may be referred to as a control code block. The control code block is a control code type defined in the foregoing P1B/P2B code block. For example, a synchronization header of the control code block may be "10", and the control code block may further include a control block type field (control block type field).

For example, in the case that the control block type field of the control code block defined in 64B/66B is 0x78, the control code block may be a start code block, namely, an S code block.

For another example, in the case that the control block type field of the control code block defined in 64B/66B is 0xFF, the control code block may be an end code block, namely, a T code block. It may be understood that only an example of the end code block is described herein. In the code block shown in FIG. 5a, a control block type field of the end code block may alternatively be 0x87, 0x99, or the like. Details are not described herein. Correspondingly, a control block type field of a second boundary code block described below in this application may be 0xFF, or may be 0x87, 0x99, 0xAA, 0xB4, 0xCC, 0xD2, 0xE1, or the like. The control block type field of the second boundary code block is not limited in this application.

For another example, in the case that the control block type field of the control code block defined in 64B/66B is 0x4B, the control code block may be a sequence ordered (sequence ordered set, O) code block, or may be referred to as a signal ordered (signal ordered set, O) code block. For example, the sequence code block may represent a link status, and the signal code block may represent information about a special signal. A difference between the sequence code block and the signal code block is not limited in this application. In the following, an O code block represents the sequence ordered code block or the signal ordered code block.

For another example, in the case that the control block type field of the control code block defined in 64B/66B is 0x1E, the control code block may be an idle (idle) code block or an error (error) code block. Whether the control code block is specifically the idle code block or the error code block may be based on a value of a 1^{st} control byte following the control block type field. For example, in the case that the first control byte is 0xIE, the control code block is the error code block, and in the case that the first control byte is 0x00, the control code block may be the idle code block.

It should be noted that, the code type shown in FIG. 5a complies with a CL82 encoding rule. In embodiments of this application, the code block may alternatively satisfy a CL49 encoding rule.

It should be further noted that, the CL49 encoding rule is applicable to a 2.5 GE, 5 GE, 10 GE, and 25 GE Ethernet interface scenarios.

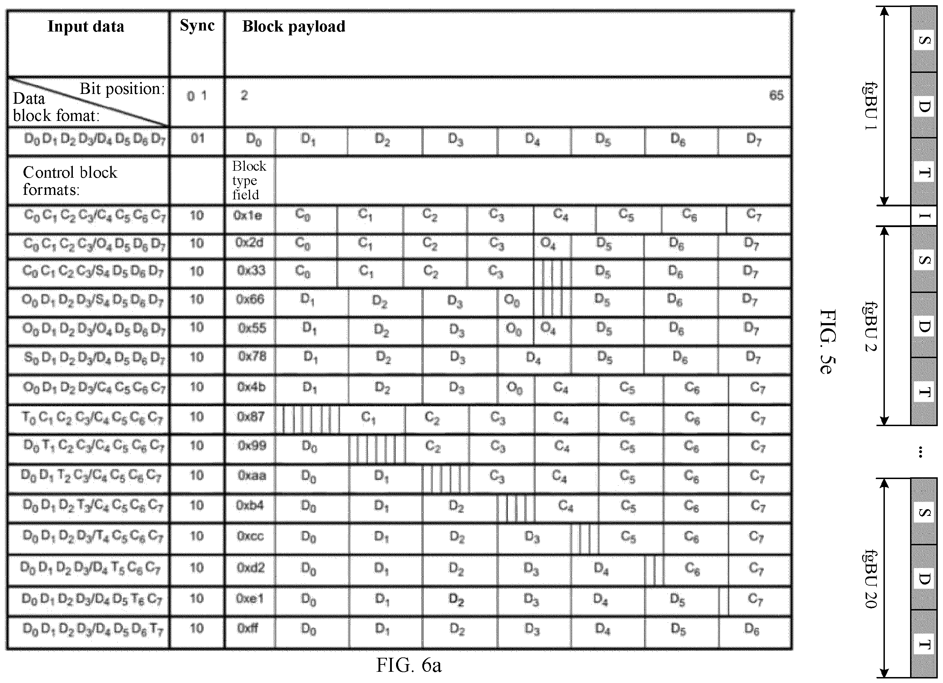

In an example, FIG. 6a shows definitions of different code types of a CL49 encoded code block. As shown in FIG. 6a, two bits (namely, a 0^{th} bit and a 1^{st} bit) of a header are synchronization header bits. A value is "10" or "01". The last 64 bits (a 2^{nd} bit to a 65^{th} bit) are payload bits for carrying payload data and the like. In FIG. 6a, each row represents a definition of a code type, where D0 to D7 represent a data byte, C0 to C7 represent a control byte, S0 represents a start of a MAC frame, and T0 to T7 represent an end of the MAC frame.

In different code blocks shown in FIG. 6a, in the case that the synchronization header bits are 0b10, a corresponding code block may be referred to as a control code block. The control code block is a control code type defined in the foregoing P1B/P2B code block. For example, a synchronization header of the control code block may be "10", and the control code block may further include a control block type field (control block type field).

Different from the CL82 encoding rule, in the CL49 encoding rule, in the case that the control block type field of the control code block defined in 64B/66B is 0x33 or 0x66, the control code block may be a start code block, namely, an S code block.

It should be noted that, as described above, in embodiments of this application, the P1B/P2B code block may be an 8B/10B code block. For example, in a low-rate Ethernet interface scenario such as a GE interface, a PCS bitstream at a physical PHY layer may be encoded at a character granularity of 8B/10B.

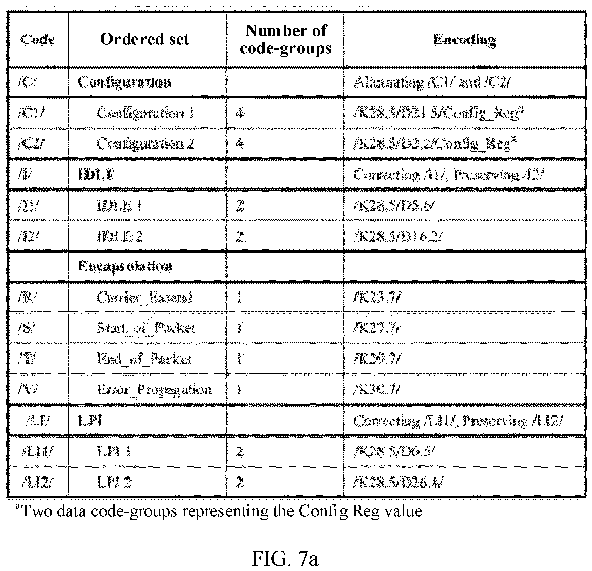

In an example, FIG. 7a shows definitions of different code types of an 8B/10B code block. As shown in FIG. 7a, different from a 64B/65B encoded code block, the 8B/10B code block does not include a synchronization header. For example, K27.7 indicates that the code block is an S code (namely, a start code). K29.7 indicates that the code block is a T code (namely, an end code). K30.7 indicates that the code block is a V code, namely, an error code. For specific descriptions, refer to a definition of a CL36 control code block in the IEEE 802.3 standard. Details are not described in this application.

### 6. Boundary code block

The boundary code block may be used to identify a start or an end of a data code block. In this application, the boundary code block may include a first boundary code block and/or a second boundary code block.

Generally, a preamble (preamble) and/or a start of frame delimiter (start of frame delimiter, SFD) in a packet may be encoded as a start code block. In addition, to identify an end of the packet, an end code block may be added after a last data code block during encoding (or the end code block may also be used to carry data and the like). That is, the start code block and the end code block described herein may be used to define at least one data code block. For example, the start code block and the end code block may be used to define 195 data code blocks. Alternatively, the start code block and the end code block may be used to define 33 data code blocks or the like. Descriptions of the start code block and the end code block described herein are merely examples. For example, the first boundary code block may be a start code block of a first code group, and an end code block of the first code group may be a third boundary code block (namely, an end code block). For another example, the second boundary code block may be an end code block of a second code group, and a start code block of the second code group may be a fourth boundary code block. The start code block of the second code group is not limited in this application.

For example, a client signal described below may be in a form of a packet. For example, a MAC frame (namely, a MAC frame) stream described below may also be referred to as a packet stream or the like. This is not limited in this application.

### 7. Code group (block group)

The following describes an example of a structure of the code group described in this application.

For example, the code group may include one start code block and one end code block, and further include one or more 64B/65B data code blocks obtained by encoding a 64B/66B data code block. It may be understood that the 64B/65B data code block is included in a payload (payload) part of the code group. In other words, the 64B/65B data code block included in the payload part of the code group may be obtained by removing a 1-bit synchronization header from the 64B/66B data code block. Whether a 0^{th} bit or a 1^{st} bit is removed from the 64B/66B data code block is not limited in this application.

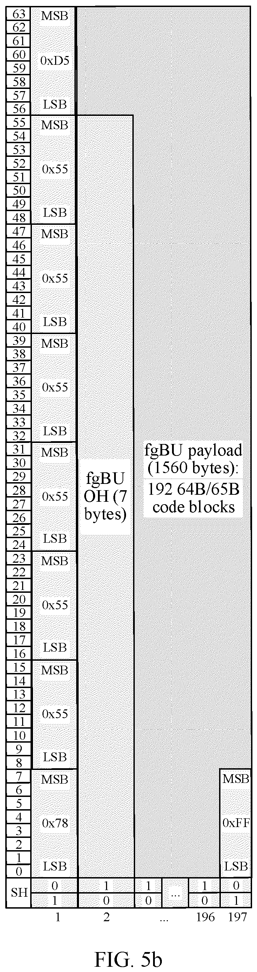

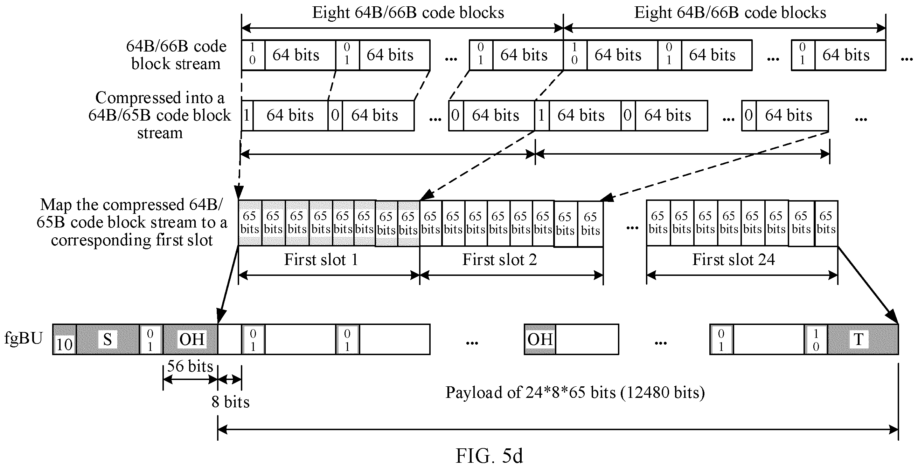

For example, FIG. 5b is a diagram of a structure of a code group described in this application. The code group is obtained based on an encoding rule shown in FIG. 5a. As shown in FIG. 5b, a 1^{st} row (corresponding to the start code block in FIG. 5a) is a start code block (that is, a synchronization header is "10" and a type is "0x78") in the code group, a 197^{th} row (corresponding to the end code block in FIG. 5a) is an end code block (that is, a synchronization header is "10" and a type is "0xFF") in the code group, and a 198^{th} row is another control code block (where the 198^{th} row is not shown in FIG. 5d) that is located after the end code block in the code block, for example, may be an I code. The first seven bytes in a 2^{nd} row are used to carry overhead (overhead, OH) information. A code block starting from an 8^{th} byte in the 2^{nd} row to a 196^{th} row is the 64B/65B data code block, and is used to carry data information. Based on a relationship between 65 and 64, the payload part of the code group may be obtained by encoding 195 data code blocks. FIG. 5d shows that the payload part is 1560 bytes. 1560 bytes=1560*8 bits=192 64B/65B. In addition, for 195 64B/66B data code blocks, there are 195*64=12480 bits=192*65 in total. Therefore, the code group shown in FIG. 5d may be understood as including one S code block, 195 D code blocks, and one T code block.

In this application, a length of the code group may be a preset length. For example, a length of a data code block in one code group may be 1560 bytes. This is not limited in this application.

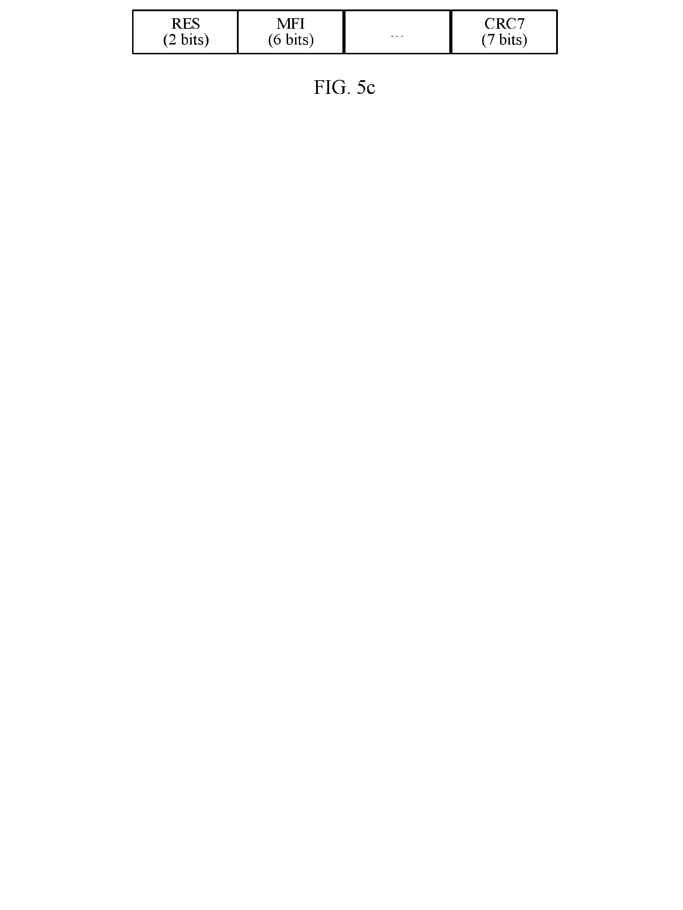

FIG. 5c is an example diagram of an overhead format. Refer to FIG. 5c. Overheads include an RES field, an MFI (multiframe indicator, multiframe indicator) field, a CRC7 field, and the like. A value in the MFI field indicates a sequence number of an encapsulated frame (for example, an fgBU). As described above, in an existing protocol, 20 fgBUs may be a multiplexing period, and a value recorded in an MFI field in overheads of each of the 20 fgBUs is a sequence number of the fgBU in the period. For example, if a value of an MFI in an fgBU 1 is 1, and a value of an MFI in an fgBU 2 is 2. The fgBU 2 and the fgBU 1 are identified as consecutive encapsulated frames, and the fgBU 2 follows the fgBU 1.

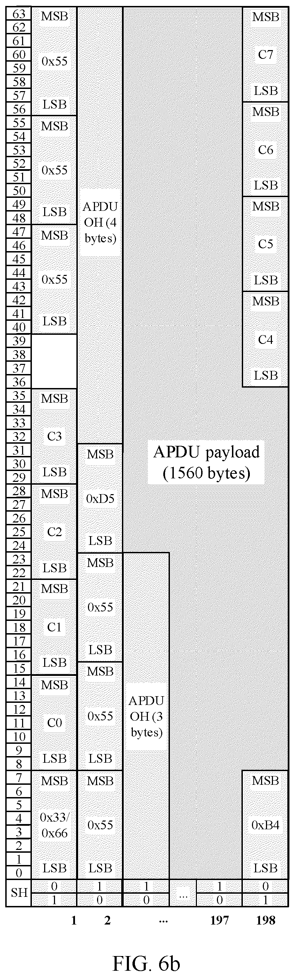

For example, FIG. 6b is a diagram of a structure of a code group described in this application. The code group is obtained based on an encoding rule shown in FIG. 6a. As shown in FIG. 6b, a 1^{st} row (corresponding to the start code block in FIG. 6a) is a start code block in the code group (that is, a synchronization header is "10" and a type is "0x33" or "0x66"). In a CL49 encoding rule, compared with a CL92 encoding rule, an APDU (Application Protocol Data Unit, application protocol data unit) code block, namely, a 3^{rd} row is newly added to an encapsulated frame format, where a synchronization header is "01". A 198^{th} row is an end code block (that is, a synchronization header is "10" and a type is 0xB4). For other descriptions, refer to the descriptions of the CL49 encoding rule. Details are not described herein again.

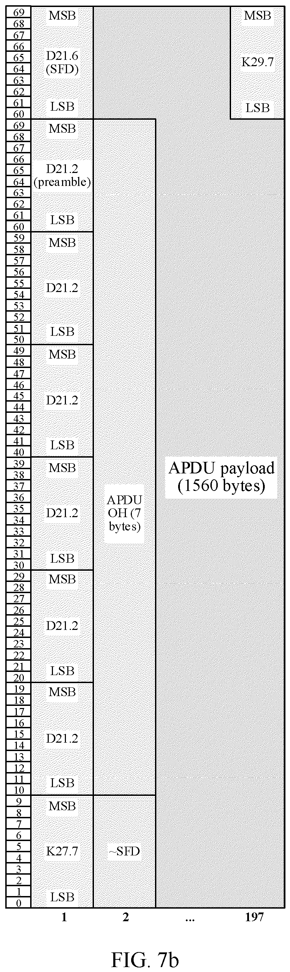

For example, FIG. 7b is a diagram of a structure of a code group described in this application. The code group is obtained based on an encoding rule shown in FIG. 7a. As shown in FIG. 7b, a first row of the code group is a start code block. A second row is an APDU, and a 197^{th} row is an end code.

The code group in FIG. 5b is used as an example. As shown in FIG. 5d, a 64B/66B code block stream is formed by performing 64B/66B encoding on a client signal (for example, a MAC frame stream). After 64B/65B compression (removal of a 1-bit synchronization header) is performed on the 64B/66B code block stream, a 64B/65B code block stream is formed. The 64B/65B code block stream may be mapped to one first slot based on a case in which every eight 64B/65B code blocks are grouped into one group.

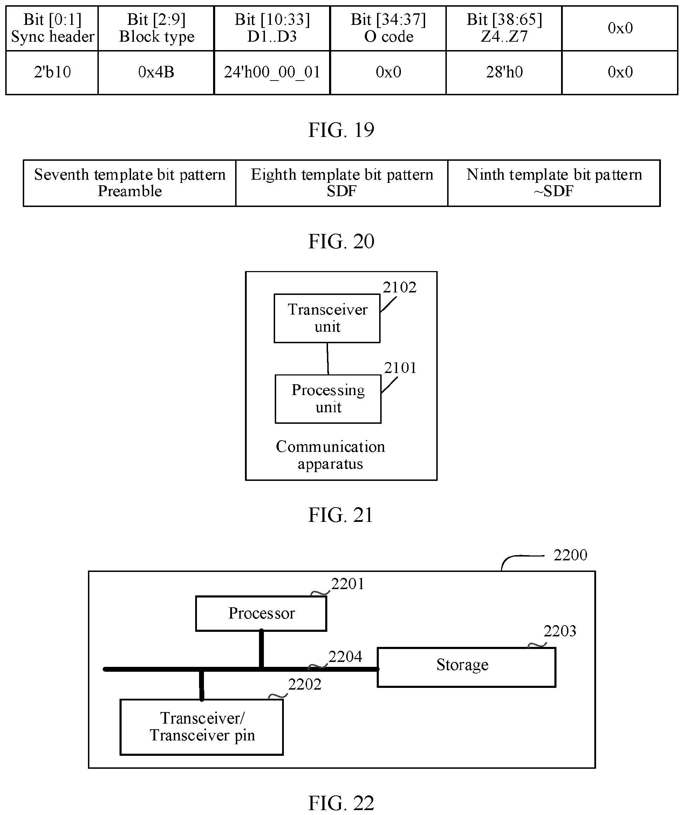

In other words, the first slot described in this application may include eight (which may alternatively be another value, for example, may be two, may be protocol-specified, and is not limited in this application) 64B/65B. Therefore, with reference to a structure of the fgBU shown in FIG. 5b, one fgBU may carry 24 (which may alternatively be another value, for example, may be two, may be protocol-specified, and is not limited in this application) first slots. As shown in FIG. 5e, 20 (which may alternatively be another value, may be protocol-specified, and is not limited in this application) fgBUs may constitute a complete multiplexing period, and one multiplexing period may include 480 first slots. In this application, because the first slot may be used to carry one client signal, one fgBU may carry a maximum of 24 client signals. fgBUs are spaced by an I code block (which may alternatively be another code block, may be protocol-specified, and is not limited in this application). It should be noted that, bitstreams corresponding to the code group structures in FIG. 6b and FIG. 7b are similar to that in FIG. 5d. For specific descriptions, refer to related content in a protocol. Details are not described one by one in this application.

It may be understood that the code group described in this application may also be referred to as a fine granularity basic unit (fine granularity basic unit, fgBU), a code block set, a code block cluster, or the like. A name thereof is not limited in this application.

It may be understood that the length of the data code block included in the code group shown herein is merely an example. In a specific implementation, the length of the data code block included in the code group may alternatively be another value or the like.

It should be noted that, the fgBU shown in FIG. 5d is used as an example for description in the following embodiments. A framing manner in this application may also be applied to an fgBU or an APDU in another form. Examples are not described one by one in this application.

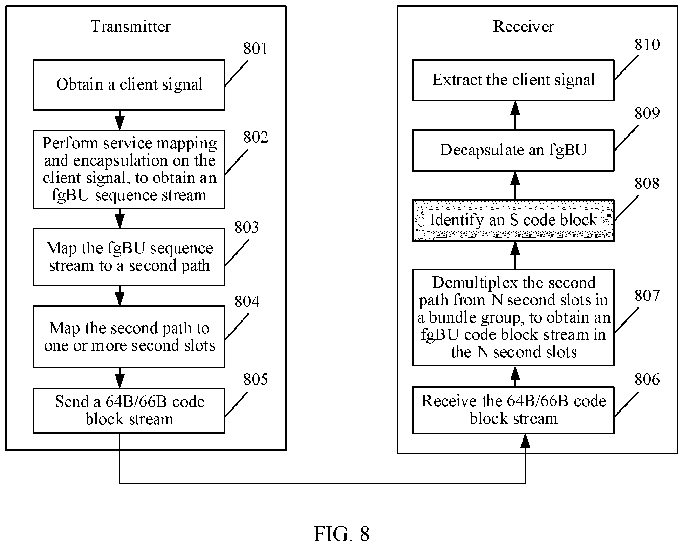

FIG. 8 is an example flowchart of interaction between devices. Refer to FIG. 8. The method specifically includes but is not limited to the following steps.

801: A transmitter obtains a client (client) signal.

Step 801 may include: For example, the transmitter receives the client signal from a panel-side interface; or the transmitter generates the client signal. It may be understood that the panel-side interface shown herein may be understood as a user-side interface (user network interface, UNI) or the like.

802: The transmitter performs service mapping and encapsulation on the client signal, to obtain an fgBU sequence stream.

FIG. 3 is used as an example. After obtaining the client signal, the transmitter may form an fgBU of a preset length through an MTN fg adaptation layer. Then, the transmitter may map the fgBU to a first path at an MTN fg termination layer.

803: The transmitter maps the fgBU sequence stream to a second path.

The fgBU sequence stream described herein means that before the fgBU sequence stream is mapped to the second path, the transmitter transmits the fgBU. For example, the transmitter may map the fgBU sequence stream to the second path at an MTN path layer. With reference to FIG. 3, the transmitter may multiplex, at an MTN path adaptation layer, one or more first slots obtained through division from the second path, that is, the first path may include one or more first slots.

804: The transmitter maps the second path to one or more second slots.

For example, the transmitter may map the second path to the one or more second slots at an MTN section layer. FIG. 3 is used as an example. The transmitter may map the second path to the one or more second slots at an MTN section adaptation layer, to multiplex a bonding group. For example, at the MTN section adaptation layer, the transmitter needs to interleave each MAC service stream (namely, a form of a 64B/66B code block), to form one 64B/66B code block stream. In this case, the transmitter may map each code block in the second path to the one or more second slots.

805: The transmitter sends the 64B/66B code block stream.

For example, the 64B/66B code block stream may enter a physical layer for transmission through the MTN section trail termination layer or the MTN section adaptation layer.

806: A receiver receives the 64B/66B code block stream.

For example, the receiver may obtain the 64B/66B code block stream from the physical layer.

807: The receiver demultiplexes the second path from N second slots in the bonding group, to obtain an fgBU code block stream in the N second slots.

It may be understood that, the fgBU code block stream described herein refers to a form of the 64B/66B code block still received by the receiver.

808: The receiver identifies an S code block.

For a method for identifying the S code block by the receiver, refer to the following method embodiments and the like. Details are not described herein.

809: The receiver decapsulates the fgBU.

After identifying the S code block from the code block stream, the receiver may identify, based on the S code block, an fgBU starting from the S code block. For example, the receiver may obtain 195 data code blocks and one T code block in the fgBU. For example, after identifying the S code block, the receiver may demultiplex the first path from the M first slots in the second path at the MTN path layer, to obtain the fgBU starting from the S code block.

It may be understood that, that the receiver demultiplexes the first path from the M first slots of the second path shown herein may also be understood as: The receiver restores the first path from the M first slots of the second path, to obtain the fgBU in the first path.

810: The receiver extracts the client signal.

For example, after demultiplexing the first path from the M first slots in the second path, the receiver may obtain a client signal corresponding to each of the M first slots.

That the receiver identifies the S code block in step 1008 may be understood as being performed by a processor at the receiver, may be understood as being implemented at the MTN path adaptation layer in an MTN network at the receiver (only an example), or may be understood as being performed by a function, a module, a unit, or the like at the receiver. This is not limited in embodiments of this application.

It should be noted that, a procedure in FIG. 8 is described by using 64B/65B encoding (including different encoding rules) as an example. The procedure in FIG. 8 is also applicable to 8B/10B encoding or encoding in another form. This is not limited in this application.

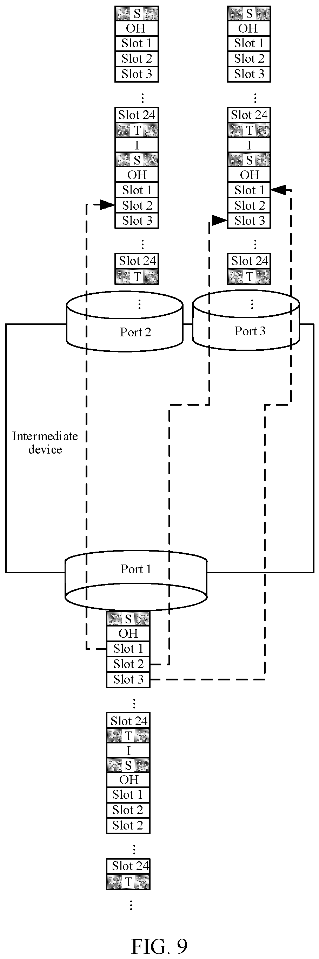

It may be understood that after extracting the client signal, the receiver may further perform a forwarding operation, a termination operation, or the like on the service stream. This is not limited in embodiments of this application. In this embodiment of this application, a receiver configured to perform forwarding may be referred to as an intermediate device (also referred to as an intermediate node or a P node, which is not limited in this application), and a receiver configured to perform a termination operation may be referred to as a receiving device. FIG. 9 is an example diagram of processing of an intermediate device. Refer to FIG. 9. The intermediate device receives a client stream through a port 1. A slot (slot) 1 carries client data 1, a slot 2 carries client data 2, and a slot 3 carries client data 3. After receiving the client stream, the intermediate device performs the same steps as the receiver in FIG. 8, that is, performs processing such as framing and decapsulation on data, and extracts a client signal (namely, client data). Different from the receiver, the receiver extracts only data in a slot corresponding to the receiver. The intermediate device may extract data in one or more different slots, re-encapsulate the data, and place the encapsulated data into a corresponding slot of a specified port. For example, as shown in FIG. 9, the client data 1 enters the intermediate device through the port 1, and is carried in the slot 1. The client data 1 leaves the intermediate device through a port 2, and is carried in the slot 2. The client data 2 enters the intermediate device through the port 1, and is carried in the slot 3. The client data 2 leaves the intermediate device through a port 3, and is carried in the slot 1. The client data 3 enters the intermediate device through the port 1, and is carried in the slot 1. The client data 1 leaves the intermediate device through the port 2, and is carried in the slot 2. It should be noted that, a forwarding manner in FIG. 9 is merely an example. This is not limited in this application.

In this embodiment of this application, identifying the S code may also be understood as framing, and the framing may also be understood as determining a start boundary (namely, the boundary code described above) of an encapsulated frame. If the S code is incorrectly identified, that is, the framing fails, this may also be understood as that the start boundary of the encapsulated frame is not correctly identified, and the receiver (including the intermediate device and the receiving device) cannot correctly extract data. It should be noted that, in this embodiment of this application, an identification failure of the S code may be incorrect identification, that is, another code block is identified as the S code. Alternatively, the identification failure of the S code may be that the S code is not identified within specified duration (which may be protocol-specified, and is not limited in this application). For example, for the receiving device, if the receiving device identifies the S code unsuccessfully, the receiving device cannot obtain user data from a corresponding slot. For another example, the intermediate device identifies the S code unsuccessfully, and cannot obtain corresponding data from the slot. In this case, in a forwarding process, the intermediate device may skip the slot that should originally carry the data. For example, in FIG. 9, the intermediate device cannot identify the S code, and cannot obtain the data in the slot 1 to the slot 3. However, a slot that should originally carry the data of the slot 1 of the port 1, for example, the slot 2 of the port 2, may carry other data. Correspondingly, the receiving device that should originally read data from the slot 2 of the port 2 may read data of another user, resulting in error spreading.

Embodiments of this application provide a framing method, to improve a case in which an S code block cannot be identified due to an occasional bit error, and improve a case in which an entire code group is discarded because the S code block cannot be identified due to the occasional bit error. In addition, the method provided in this application can further effectively improve system fault tolerance.

The code block identification method provided in this application may be applied to a communication apparatus. The communication apparatus may be a wired device, a switch, a router, a network interface card, a packet transport network (packet transport network, PTN), an agile transport network (agile transport network, ATN), a slicing packet network (slicing packet network, SPN), or the like. A specific form of the communication apparatus is not limited in this application. For example, the communication apparatus may include a receiver configured to receive a code block stream; or the communication apparatus may be understood as a receiver configured to receive a code group.

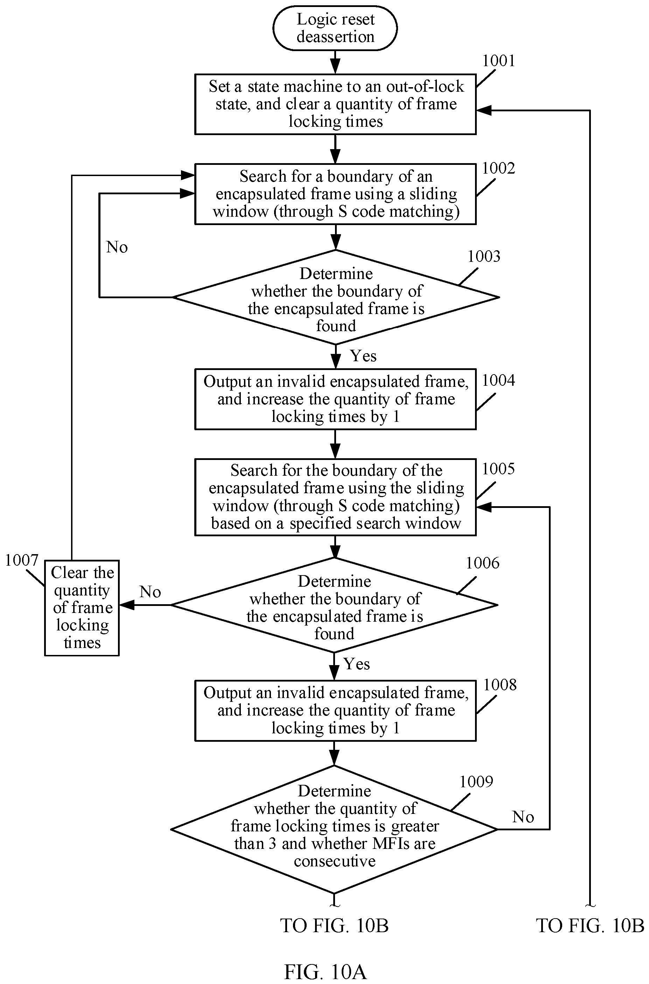

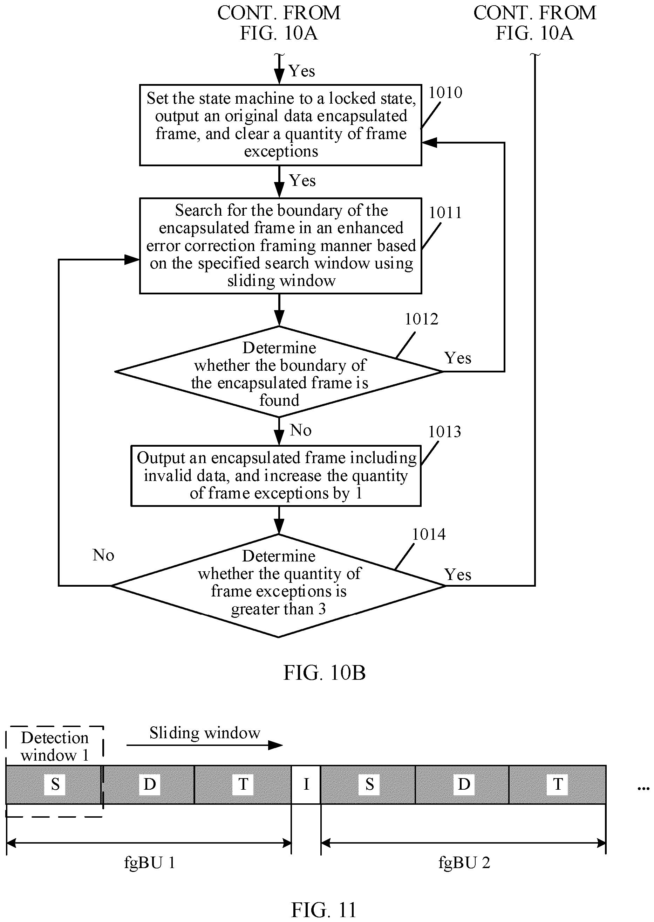

FIG. 10A and FIG. 10B are an example schematic flowchart of a code block identification method. Refer to FIG. 10A and FIG. 10B. The method specifically includes but is not limited to the following steps.

1001: Set a state machine to an out-of-lock state, and clear a quantity of frame locking times.

For example, after performing logical reset deassertion, a receiver (which may be an intermediate device or a receiving device, and details are not described below) establishes a data transmission path with an upper-level device (for example, a transmitter or an intermediate device). For a concept of the data transmission path, refer to the descriptions in FIG. 4. Details are not described herein again.

The logical reset deassertion may be understood as device initialization. It should be noted that, the logical reset deassertion may occur when the device is powered on, or may occur after the device is restarted. This is not limited in this application.

For example, in this embodiment of this application, the state machine runs on a chip, and a state of the state machine includes but is not limited to an out-of-lock state and a locked state. For example, the out-of-lock state further includes an initial frame searching state in the out-of-lock state, an error frame processing state in the out-of-lock state, and a normal frame processing state in the out-of-lock state. For example, the locked state further includes an error frame processing state in the locked state and a normal frame processing state in the locked state.

For example, in this embodiment of this application, the state machine may be switched to a corresponding state based on different conditions. Execution manners in the states are the same or different. In the following embodiments, a condition of switching states of the state machine and processing manners in different states are described in detail.

In this example, after performing logical reset deassertion, the receiver establishes the data transmission path with the upper-level device, for example, establishes a fine granularity transmission path. For a specific establishment process, refer to related content in a protocol. Details are not described herein. In this embodiment of this application, when the path is initially established, it is specified in the protocol that the receiver needs to consecutively identify an S code for at least three (which may alternatively be another value, may be set according to the protocol, and is not limited in this application) times. That is, a subsequent reading procedure can be performed only after a start boundary of an encapsulated frame is identified for at least three consecutive times.

In this example, the receiver performs logical reset deassertion, and the state machine is set to the out-of-lock state by default, and may be specifically set to the initial frame searching state in the out-of-lock state. In this embodiment of this application, the out-of-lock state may indicate that establishment of the transmission path at the receiver is not completed or establishment of the transmission path is completed, but an error may occur in data in the path. The initial frame searching state in the out-of-lock state indicates the receiver to search for the start boundary of the encapsulated frame in an S code matching manner. In other words, in this embodiment of this application, a condition that the state machine is switched to the initial frame searching state in the out-of-lock state includes: The receiver performs logical reset deassertion. Certainly, a condition for entering the state may further include another condition, and specific content is described below. For example, when the state machine is in the initial frame searching state in the out-of-lock state, an operation performed by the receiver includes: searching for the start boundary of the encapsulated frame using a sliding window in the S code matching manner, that is, performing S1002.

In this example, the state machine is initially set to the out-of-lock state, and the receiver clears the quantity of frame locking times. In this embodiment of this application, the quantity of frame locking times indicates a quantity of consecutive times that the S code is found in the out-of-lock state. The quantity of frame locking times may also be referred to as a quantity of searching times or another name. This is not limited in this application. Optionally, the receiver may include one or more counters. The counter may be configured to record the quantity of frame locking times and a quantity of frame exceptions in this embodiment of this application. It should be noted that, different counting types may correspond to different counters. This is not limited in this application.

In this embodiment of this application, each time the state machine is switched to the out-of-lock state (including being initially switched to the out-of-lock state and being switched from another state to the out-of-lock state), the recorded quantity of frame locking times is cleared. Optionally, the recorded quantity of frame locking times may be a previously recorded record that is not cleared. After clearing the quantity of frame locking times, the receiver may record a new quantity of frame locking times.

1002: Search for the boundary of the encapsulated frame using the sliding window (through S code matching).

FIG. 11 is an example diagram of frame searching using the sliding window. Refer to FIG. 11. After the state machine enters the initial frame searching state of in the out-of-lock state, the receiver searches for a boundary of an encapsulated frame using the sliding window based on a first detection window (referred to as a detection window 1 below).

In this embodiment of this application, a bit selected in a detection window (including the detection window 1 and each detection window below) may be referred to as a to-be-identified bit image. A to-be-identified bit pattern may include some or all bits of one or more modules.

In this application, the to-be-identified bit pattern may be obtained through the detection window. For example, the detection window may be used to detect whether a first code block is a first boundary code block, for example, an S code.

In this embodiment of this application, the receiver may match the to-be-identified bit image with a preset template bit image, to detect whether the to-be-identified bit image is the first boundary code block.

For example, the template bit pattern is a bit sequence that is expected to appear when whether the first code block is the first boundary code block is determined. For example, the template bit pattern may be understood as a bit sequence that is expected to appear in the detection window when whether the first code block is the first boundary code block is determined.

In this embodiment of this application, if a port of the receiver complies with a CL82 encoding rule (where for a concept, refer to the foregoing descriptions), the template bit image may be classified into at least three types.

First type: The template bit pattern includes a first template bit pattern. The first template bit pattern is used to identify a first bit pattern. In other words, a location of the first template bit pattern in the template bit pattern is in one-to-one correspondence with a location of the first bit pattern in the to-be-identified bit pattern. For a correspondence between the to-be-identified bit pattern and the template bit pattern, further refer to the following examples.

In this embodiment of this application, the first template bit image may be a template bit pattern corresponding to a start code block (namely, the first boundary code block). The first template bit pattern may be the template bit pattern corresponding to the first boundary code block. For example, the first boundary code block may be an S code block.

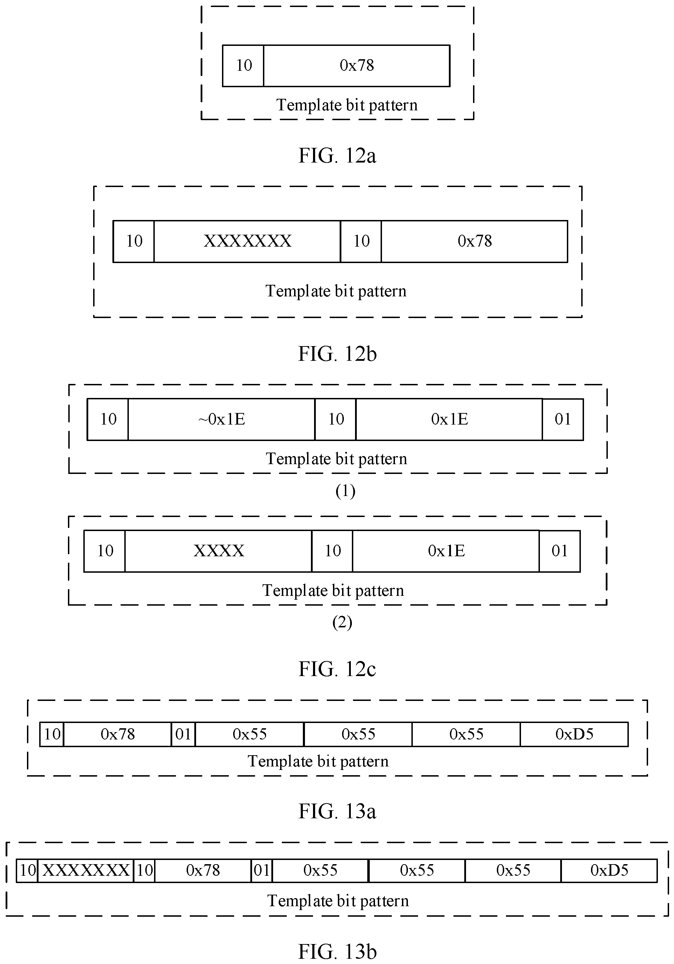

Optionally, as shown in FIG. 12a, the first template bit pattern may include template bit patterns corresponding to a 0^{th} bit to a 9^{th} bit in the S code block. In other words, the first template bit pattern includes a synchronization header (namely, "10") and a control block type field (namely, "0x78") of the S code block.

Optionally, the first template bit pattern may further include the 0^{th} bit to the 9^{th} bit in the S code block and a template bit pattern corresponding to any one of a 1^{st} control byte (for example, a byte D1 in FIG. 5a) to a 7^{th} control byte (for example, a byte D7 in FIG. 5a). This is not limited in this application. The descriptions are also applicable to each template bit pattern below, and details are not described again below.

Optionally, the first template bit pattern may further include template bit patterns corresponding to the 2^{nd} bit to the 9^{th} bit in the S code block. The first template bit pattern may further include the control block type field of the S code block or the like. This is not limited in this application. The descriptions are also applicable to each template bit pattern below, and details are not described again below.

Second type: The template bit image includes a first template bit pattern and a second template bit pattern. For the first template bit image, refer to FIG. 12a. Details are not described herein again. As shown in FIG. 12b, the second template bit pattern indicates that a second code block is a non-D code. As described above, if a synchronization header of a D code is 01, a synchronization header of the second code block indicated by the second template bit pattern is 10, that is, the second code block is the non-D code. It may be understood that, in this embodiment of this application, the second template bit pattern indicates that the first code block is an S code block and the second code block is the non-D code block.

Third type: The template bit image includes a third template bit pattern, a fourth template bit pattern, and a fifth template bit pattern. The third template bit pattern indicates that a third code block is a non-D (denoted as ~D) code block and a non-E code block (namely, ~E), the fourth template bit pattern indicates that a fourth code block is an E code block, and the fifth template bit pattern indicates that a fifth code block is a D code block. As shown in (1) in FIG. 12c, if a bit pattern corresponding to the third template bit pattern is the non-E code block, a synchronization header of the third template bit pattern is "10", and a control block type field of the third template bit pattern is different from a control block type field of the E code block. If the control block type field of the E code block is 0x1E, the control block type field of the third template bit pattern is non-0x1E (namely, ~0x1E). As shown in (2) in FIG. 12c, if the third template bit pattern is the non-D code block, a synchronization header of the third template bit pattern is 10, that is, is different from a synchronization header (namely, 01) of the D code block. If the fourth template bit pattern is the E code block, a synchronization header is 10, and a control block type field is 0x1E. If the fifth template bit pattern is the D code block, the fifth template bit image is a synchronization header 01 of the D code block. It should be noted that, the template bit pattern shown in (1) in FIG. 12c and the template bit pattern shown in (2) in FIG. 12c are in an "AND" relationship. In other words, the third template bit pattern may be understood as indicating that the third code block is the non-D code block and the non-E code block. It may be understood that, the third template bit pattern indicates that the third code block is the non-E code block and the non-D code block, the fourth code block is the E code block, and the fifth code block is the D code block. It should be noted that, the S code block may be encoded into the E code block due to another reason such as a bit error. Therefore, in the following, if the to-be-identified bit pattern conforms to the third module bit pattern, the fourth code block (namely, a code block identified as the E code block) in the to-be-identified bit pattern is a start boundary of the encapsulated frame.

In this embodiment of this application, if a port of the receiver complies with a CL49 encoding rule (where for a concept, refer to the foregoing descriptions), the template bit image may be classified into at least three types.

First type: The template bit pattern includes a first template bit pattern and a sixth template bit pattern. For descriptions of the first template bit pattern, refer to the foregoing descriptions. Details are not described herein again. The sixth template bit pattern is used to identify a sixth bit pattern. In other words, a location of the sixth template bit pattern in the template bit pattern is in one-to-one correspondence with a location of the sixth bit pattern in the to-be-identified bit pattern.

In this embodiment of this application, the sixth template bit pattern may be a template bit pattern corresponding to a D code block. Optionally, as shown in FIG. 13a, the first template bit pattern may include template bit patterns corresponding to a 0^{th} bit to a 9^{th} bit in an S code block. In other words, the first template bit pattern includes a synchronization header (namely, "10") and a control block type field (namely, "0x78") of the S code block. The sixth template bit pattern includes a synchronization header (namely, 01) of the D code block (which may also be understood as a sixth code block) and four least significant bytes of the D code block, including (0x55, 0x55, 0x55, and 0xD5).

Second type: The template bit pattern includes a first template bit pattern, a second template bit pattern, and a sixth template bit pattern. As shown in FIG. 13b, the template bit pattern may be understood as a bit pattern corresponding to the sixth template bit pattern that is added based on FIG. 12b. For related descriptions, refer to the foregoing descriptions. Details are not described herein again.

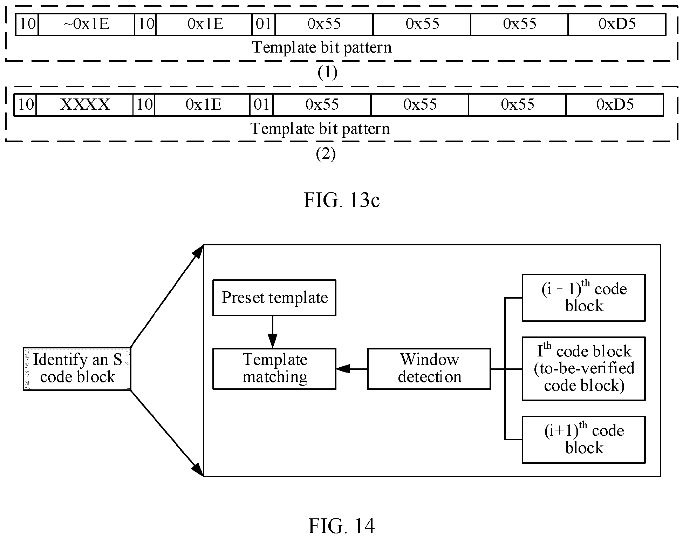

Third type: The template bit pattern includes a third template bit pattern, a fourth template bit pattern, and a sixth template bit pattern. As shown in FIG. 13c, the template bit pattern includes the third template bit pattern, the fourth template bit pattern, and the sixth template bit pattern. For related descriptions, refer to the foregoing descriptions. Details are not described herein again.

It can be learned from FIG. 12a to FIG. 13c that, compared with a template bit of the CL82 encoding rule, a sixth template bit, namely, the synchronization header and the four least significant bytes of the D code block, is added to a template of the CL49 encoding rule. An objective is to avoid misjudgment in CL49 encoding based only on the template bit patterns shown in FIG. 12a to FIG. 12c. Therefore, the synchronization header and the four least significant bytes of the D code block are introduced, to avoid the misjudgment.

As described above, as shown in FIG. 14, the receiver searches for the boundary of the encapsulated frame using the sliding window, that is, performs template matching based on a to-be-identified bit pattern including code blocks selected in the detection window and a preset template (namely, the template bit pattern). The code blocks selected in the detection window may include an i^{th} code block (for example, the first code block), or an i^{th} code block and an (i-1)^{th} code block (for example, the first code block and the second code block described above), or an i^{th} code block, an (i-1)^{th} code block, and an (i+1)^{th} code block (for example, the third code block, the fourth code block, and the fifth code block described above).

In S1002, as shown in FIG. 11, the receiver performs searching using the sliding window through the detection window 1, and a template bit pattern corresponding to the detection window 1 is the first type of template bit pattern obtained through CL82 encoding or the first type of template bit pattern obtained through CL49 encoding. In other words, through the detection window 1, S code matching is actually performed based on a bit pattern corresponding to an S code, to detect whether the selected first code block is the S code.

The following describes in detail a template matching manner in this embodiment of this application based on the first type of template bit pattern obtained through CL82 encoding.

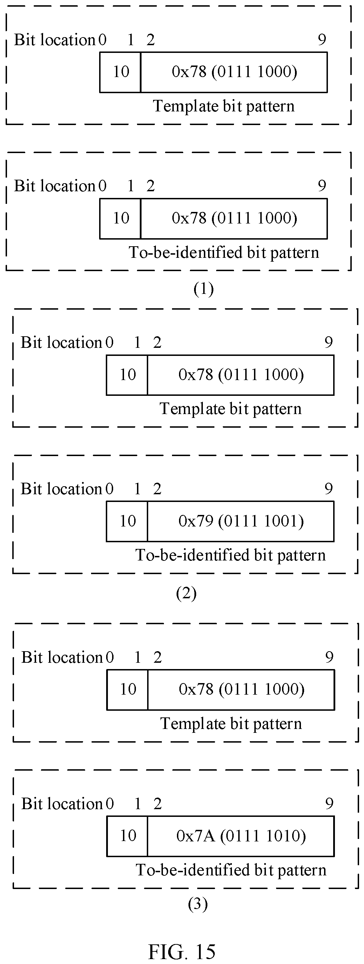

As shown in (1) in FIG. 15, when a 0^{th} bit and a 1^{st} bit in the first code block selected in the detection window 1 are 10 (that is, a synchronization header of the first code block is 10), and a 2^{nd} bit to a 9^{th} bit in the first code block are 0x78, through comparison with the template bit pattern, a case in which a quantity of inconsistent bits is 0 can be obtained.

As shown in (2) in FIG. 15, when a 0^{th} bit and a 1^{st} bit in the first code block selected in the detection window 1 are 10, and a 2^{nd} bit to a 9^{th} bit in the first code block are 0x79, through comparison with the template bit pattern, a case in which a quantity of inconsistent bits is 1 can be obtained.

As shown in (3) in FIG. 15, when a 0^{th} bit and a 1^{st} bit in the first code block selected in the detection window 1 are 10, and a 2^{nd} bit to a 9^{th} bit in the first code block are 0x7A, through comparison with the template bit pattern, a case in which a quantity of inconsistent bits is 1 can be obtained.

For example, when the 0^{th} bit and the 1^{st} bit in the first code block are 01, and the 2^{nd} bit to the 9^{th} bit in the first code block are 0x78, through comparison with the template bit pattern, a case in which the quantity of inconsistent bits is 1 can be obtained.

It may be understood that the structure of the template bit pattern shown above is merely an example, and the structure of the template bit pattern may alternatively be another structure or the like. This is not limited in this application. It should be noted that, regardless of how the structure of the template bit pattern changes, provided that the first bit pattern in the to-be-identified bit pattern corresponds to the first template bit pattern, the second bit pattern corresponds to the second template bit pattern, and the third bit pattern corresponds to the third template bit pattern, all changes fall within the protection scope of this application.

It may be understood that, that the first bit pattern described in this application corresponds to the first template bit pattern means that the 0^{th} bit in the first code block corresponds to a 0^{th} bit in the first template bit pattern, the 1^{st} bit in the first code block corresponds to a 1^{st} bit in the first template bit pattern, and the rest can be deduced by analogy. For example, as shown in (2) in FIG. 15, the 0^{th} bit and the 1^{st} bit in the first bit pattern are respectively 10. In this case, 10 may be compared with the 0^{th} bit and the 1^{st} bit 10 in the first template bit pattern. If the 2^{nd} bit to the 9^{th} bit in the first bit pattern are 0x79, and a binary value is 0111 1001, the 2^{nd} bit to the 9^{th} bit, namely, 0111 1001, need to be compared with a 2^{nd} bit to a 9^{th} bit, namely, 0111 1000 in the first template bit pattern.

It may be understood that, the corresponding descriptions herein are also applicable to embodiments shown below, and details are not described below again.

It may be understood that the bit pattern (bit pattern) described in this application may also be referred to as a bit map, a bit string (bit string), a bit sequence (bit sequence), a bit mode, or the like. A name thereof is not limited in this application. In addition, the template bit pattern (bit pattern) described in this application may also be referred to as a preset bit pattern, a preset template, a preconfigured template, or the like. A name thereof is not limited in this application. In addition, the to-be-identified bit pattern described in this application may also be referred to as a to-be-verified bit pattern, a target bit pattern, or the like. A name thereof is not limited in this application.

In this embodiment of this application, the receiver may match the to-be-identified bit image with the preset template bit image, and obtain a matching result. The matching result is a quantity of different bits in the first template bit image and the to-be-identified bit pattern.

1003: Determine whether the boundary of the encapsulated frame is found.

For example, in this example, the receiver may search for, based on the manners shown in FIG. 11 and FIG. 15, the S code using the sliding window based on the detection window 1, and obtain a detection result. The detection result is a quantity of different bits in the first template bit pattern and the to-be-identified bit pattern. A specific detection manner is described above, and details are not described herein again. The first template bit pattern may be a first type of template that conforms to CL49 encoding, or may be a first type of template that conforms to CL82 encoding. In this embodiment of this application, only template bit patterns of the CL82 encoding rule are used as an example for description. A processing manner of CL49 is the same as a processing manner of CL82, and a difference lies in that a bit pattern corresponding to the sixth code block is additionally checked. Other descriptions are similar, and details are not described again in this application.

In an example, when the first template bit pattern is completely consistent with the to-be-identified bit pattern, or when the first template bit pattern is inconsistent with the to-be-identified bit pattern and a quantity of inconsistent bits in the to-be-identified bit pattern and the template bit pattern is less than or equal to a first threshold, the first code block is identified as the first boundary code block, that is, the receiver determines that the boundary of the encapsulated frame is found, and S1004 is performed. In this embodiment of this application, after the receiver determines that the boundary of the encapsulated frame is found, the state machine is switched to the normal frame processing state in the out-of-lock state. In this embodiment of this application, after the receiver finds the boundary of the encapsulated frame, the receiver obtains a value of an MFI field in overheads of the encapsulated frame. For descriptions of an MFI, refer to FIG. 5c. Details are not described herein again.

That the first template bit pattern is inconsistent with the first bit pattern means that a value of the first template bit pattern and a value of the first bit pattern at corresponding locations are not completely consistent. In other words, even if the first template bit pattern cannot be completely consistent with the first bit pattern, it may be determined that the first code block is the S code block. This is because, a synchronization header of each code block is protected by a 2-bit Hamming distance, and a probability of two consecutive bit errors, for example, 01 jumping to 10 is low. In addition, control block type fields are protected by a 4-bit Hamming distance, and an error of one or two of eight bits in the control block type field does not cause the S code block to be incorrectly identified as another control code block, for example, an O code block or a T code block. Therefore, in this embodiment of this application, even if the value of the to-be-identified bit pattern and the value of the first template bit pattern at the corresponding locations are not completely consistent, the first code block may also be identified as the S code block.

In another example, when the first template bit pattern is inconsistent with the to-be-identified bit pattern, and a quantity of inconsistent bits in the to-be-identified bit pattern and the template bit pattern is greater than a first threshold, the receiver determines that no boundary of the encapsulated frame is found, and the receiver repeatedly performs S1002. To be specific, the receiver moves a left edge of the detection window 1 backward by a distance of one code block. For a specific sliding window manner, refer to an embodiment in a conventional technology. This is not limited in this application.

1004: Output an invalid encapsulated frame, and increase the quantity of frame locking times by 1.

As described above, the state machine is currently in the normal frame processing state in the out-of-lock state, and the state indicates that the receiver has identified the encapsulation boundary. However, in the out-of-lock state, data in the encapsulated frame corresponding to the boundary of the encapsulated frame identified by the receiver may be empty or unreliable. According to a protocol, the receiver needs to consecutively find at least three boundaries of the encapsulated frame before starting to receive (that is, extract) the data in the encapsulated frame. In this example, it is assumed that the receiver successfully searches for the boundary of the encapsulated frame for the first time. Because the data does not need to be extracted, to ensure a correct sequence of slots (where for a principle, refer to the descriptions in FIG. 9), the receiver may discard the data of the encapsulated frame of the boundary of the encapsulated frame that is identified, generate new data of the encapsulated frame, and re-encapsulate the newly generated data. In this embodiment of this application, the data of the newly generated encapsulated frame may be invalid data. For example, all slots in the encapsulated frame may include non-D code blocks such as LF code blocks, I code blocks, or E code blocks. This is not limited in this application. In this embodiment of this application, the newly generated encapsulated frame may also be referred to as an invalid encapsulated frame, an all-E code block encapsulated frame, or the like. This is not limited in this application.

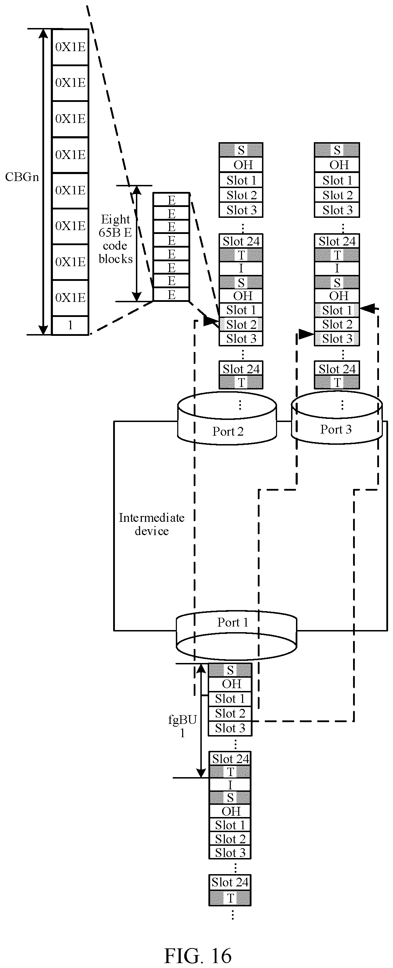

As shown in FIG. 16, the intermediate device is still used as an example. In this embodiment of this application, in the out-of-lock state, after finding the start boundary (namely, the S code) of the encapsulated frame (for example, an fgBU 1), the intermediate device discards the data of the encapsulated frame, and generates the all-E code block encapsulated frame. A structure, an encoding manner, and the like of the newly generated encapsulated frame are the same as those of the fgBU 1. The intermediate device still allocates, in the allocation manner shown in FIG. 9, data of each slot of the fgBU 1 to a specified slot of a specified port. A slot 2 of a port 2 is used as an example. The slot 2 of the port 2 is originally used to carry data carried in a slot 1 of an encapsulated frame of a port 1. Because data of a current encapsulated frame fgBU is all E code blocks, the data carried in the slot 2 is also all E code blocks. That is, N (where N may be equal to 8 or the like, which specifically depends on a coding scheme, and is not limited in this application) 65B (which may alternatively be 10B or the like, which specifically depends on a coding scheme, and is not limited in this application) code blocks included in the slot 2 are all E code blocks. Correspondingly, when receiving the encapsulated frame sent by the intermediate device, the receiving device may receive data in the slot 2 of the port 2 of the intermediate device. The receiving device identifies that the data is the E code block, and may discard the data. In other words, the receiving device may still obtain data from a corresponding slot based on an existing agreement. In this application, a data error caused by a framing failure is intercepted on a receiving device side, so that error spreading caused by the framing failure can be avoided.

In this embodiment of this application, after the receiver finds, in the out-of-lock state, the boundary of the encapsulated frame, namely, the start boundary (namely, the S code) of the fgBU, the quantity of frame locking times recorded by the counter at the receiver is increased by 1. For a concept of the quantity of frame locking times, refer to the foregoing descriptions. Details are not described herein again.

1005: Search for the boundary of the encapsulated frame using the sliding window (through S code matching) based on a specified search window.

Specifically, after the receiver finds the boundary of the encapsulated frame, the receiver counts a quantity of frames by using the counter. After receiving 198 (where a specific quantity depends on a quantity of code blocks included in the encapsulated frame, may be set based on an actual requirement, and is not limited in this application) encapsulated frames, the receiver detects, based on the received code block, whether the code block is a non-I code block (which may alternatively be another code block, for example, a non-O code block, may be set based on an actual requirement, and is not limited in this application). As described above, there may be an I code block between fgBUs. Correspondingly, after a receiver receives the 198 code blocks, at a 1^{st} identified non-I code block, the state machine is switched to a specified window frame searching state in the out-of-lock state, where the specified window frame searching state indicates to search for, based on a specified window, the boundary of the encapsulated frame using the sliding window. That is, the receiver may search for the boundary of the encapsulated frame using the sliding window at the 1^{st} identified non-I code based on the specified search window. A left boundary of the specified search window is aligned with a start location of the 1^{st} non-I code block.

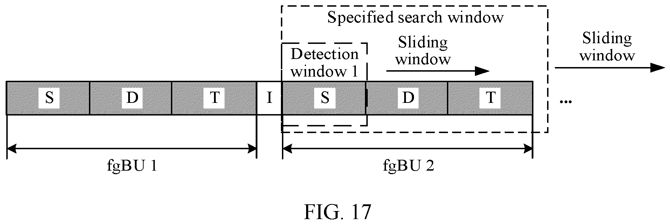

FIG. 17 is an example diagram of a sliding window in a specified search window. Refer to FIG. 17. For example, the specified search window is set at the receiver, and a length of the specified search window is optionally a length of 32 code blocks, or may be set based on an actual requirement. This is not limited in this application. The length of the specified search window is greater than a length of a detection window (including the detection window 1 and each detection window described below) in this embodiment of this application.

Refer to FIG. 17. Assuming that the receiver finds the boundary of the encapsulated frame of the fgBU 1 in 1002, the receiver sets the specified search window at a location that is spaced from the found encapsulated frame boundary by a length (which is protocol-specified, and is not limited in this application) of the fgBU. An interval between a left boundary of the specified search window and an S code of the fgBU 1 may be greater than or equal to the length of the fgBU.

For example, the receiver performs searching using the sliding window in the specified search window based on the detection window 1. For example, if the length of the specified search window is 32 code blocks, a quantity of times of sliding window based on the detection window 1 in the specified search window is 32 times, and a length of each time of sliding window is one code block. It may be understood that, in the out-of-lock state, the receiver searches for the boundary of the encapsulated frame based on the first template bit pattern. For a specific searching manner, refer to the foregoing descriptions. Details are not described herein again.

1005: Determine whether the boundary of the encapsulated frame is found.

For example, the receiver may determine, based on a result of matching between the first code block selected in the detection window 1 and the first template bit pattern, whether the first code block is an S code, that is, whether the boundary of the encapsulated frame is found. For a specific matching manner, refer to the foregoing descriptions. Details are not described herein again.

In an example, if the receiver finds the boundary of the encapsulated frame, a state machine is switched to the normal frame processing state, and S1008 is performed.

In another example, if the receiver does not find the boundary of the encapsulated frame, S1007 is performed.

1007: Clear the quantity of frame locking times.

For example, as described above, the receiver needs to consecutively find at least three boundaries of the encapsulated frame. If the receiver finds no boundary of the encapsulated frame during current searching, the receiver clears a quantity of times of consecutively finding the boundary of the encapsulated frame. The receiver starts to count a quantity of frames, and repeatedly performs 1002 after receiving 198 code blocks.

1008: Output an invalid encapsulated frame, and increase the quantity of frame locking times by 1.

When the state machine is in the normal frame processing state in the out-of-lock state, the receiver outputs an invalid encapsulated frame, and increases the quantity of frame locking times by 1. For specific descriptions, refer to 1004. Details are not described herein again.

1009: Determine whether the quantity of frame locking times is greater than 3 and whether MFIs are consecutive.

For example, as described above, according to a protocol, at least three boundaries of the encapsulated frame need to be consecutively found for the encapsulated frame. That is, the quantity of frame locking times recorded by the counter needs to be greater than 3, and MFIs in overheads in the encapsulated frame corresponding to consecutively found boundaries of the encapsulated frame are consecutive.

In this embodiment of this application, each time the receiver finds one boundary of the encapsulated frame, the receiver may obtain an MFI value in the overheads. For example, in 1003, the receiver has obtained an MFI value of an encapsulated frame found last time. The receiver compares the MFI value of the encapsulated frame found this time with the MFI value obtained last time, to detect whether the two MFI values are consecutive.

In an example, if the quantity of frame locking times is less than or equal to 3, and MFI values are non-consecutive, the receiver sets the quantity of frame locking times to 1, records a value of an MFI field obtained this time, and re-performs 1005. In a process of re-performing 1005, if the receiver finds the boundary of the encapsulated frame, the quantity of frame locking times is increased by 1 and then becomes 2, and the re-obtained MFI value is compared with an MFI value saved last time, to detect whether the MFI values are consecutive. The process is repeated.

In another example, if the quantity of frame locking times is less than or equal to 3, and a quantity of MFI times is consecutive, the receiver performs S1005.

In still another example, if the quantity of frame locking times is greater than 3, and a quantity of MFI times is non-consecutive, the receiver sets the quantity of frame locking times to 1, records a value of the MFI field obtained this time, and re-performs 1005. In a process of re-performing 1005, if the receiver finds the boundary of the encapsulated frame, the quantity of frame locking times is increased by 1 and then becomes 2, and the re-obtained MFI value is compared with an MFI value saved last time, to detect whether the MFI values are consecutive. The process is repeated.

In still another example, if the quantity of frame locking times is greater than 3, and the MFIvalue and a previous MFI value are consecutive, the receiver performs 1010.

1010: Set the state machine to the locked state, output original data, and clear the quantity of frame exceptions.

In this example, after the receiver detects that the counter is greater than 3, that is, after the boundary of the encapsulated frame is found for the fourth time, the state machine is switched from the out-of-lock state to the locked state. The receiver may extract data in the encapsulated frame corresponding to the boundary of the encapsulated frame found for the fourth time, and perform processing such as a forwarding or termination operation. For a specific processing process, refer to the descriptions in FIG. 8 or FIG. 9. Details are not described herein again.

For example, the receiver clears the quantity of frame exceptions recorded by the counter. The quantity of frame exceptions indicates a quantity of consecutive failures of searching for the boundary of the encapsulated frame when the state machine is in the locked state. According to a protocol, if the receiver searches for the boundary of the encapsulated frame unsuccessfully for three consecutive times, there may be a problem in a transmission path of the receiver, or searching for the boundary of the encapsulated frame may fail due to another problem.

1011: Search for the boundary of the encapsulated frame using the sliding window in an enhanced error correction framing manner based on the specified search window.

1012: Determine whether the boundary of the encapsulated frame is found.

In this embodiment of this application, when the state machine is in the locked state, the receiver may search for the boundary of the encapsulated frame in the enhanced error correction framing manner.

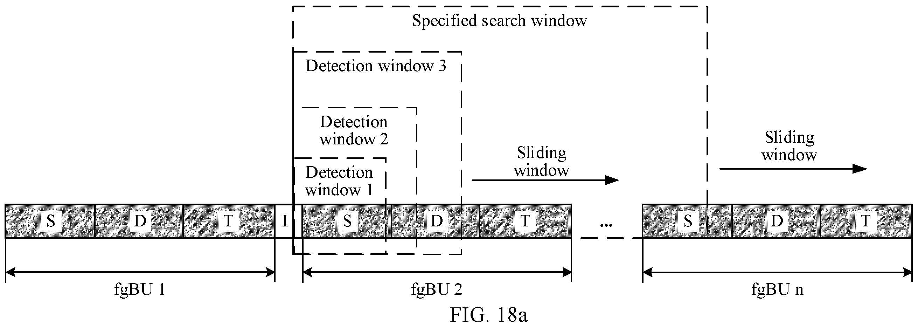

FIG. 18a is an example diagram of an enhanced error correction framing manner. Refer to FIG. 18a. In this embodiment of this application, the state machine is in the locked state. To be specific, when the receiver has correctly identified an fgBU and starts to receive data, the receiver continues to identify a subsequent fgBU, to receive corresponding data. In other words, the receiver needs to identify a start boundary of each fgBU, to correctly receive data.

For example, the receiver selects a plurality of code blocks based on a specified search window. A left boundary of the specified search window is aligned with the 1^{st} identified non-I code described above, and a length of the window may be set based on an actual requirement, for example, to 32 code blocks. For descriptions of the specified search window, refer to related content of S1005. Details are not described herein again. In this embodiment of this application, the receiver performs detection in the specified search window based on the detection window 1.

For example, the detection window 1 is used to select the first code block, and a length of the detection window 1 may be greater than or equal to a length of the first code block. A to-be-identified bit pattern including the first code block selected in the detection window 1 is matched with the first type of template bit pattern in CL82 (or CL49), namely, a bit pattern including the first template bit pattern, to detect whether the first code block is the S code. For a part that is not described, refer to the foregoing descriptions. Details are not described herein again.

For example, a detection window 2 is used to select the first code block and a second code block, and a length of the detection window 2 is greater than or equal to a sum of lengths of the first code block and the second code block. A to-be-identified bit pattern including the first code block and the second code block that are selected in the detection window 2 is matched with the second type of template bit pattern in CL82, to detect whether the first code block is the S code. The second type of template bit pattern includes the first template bit pattern and the second template bit pattern. For specific descriptions, refer to the foregoing descriptions. Details are not described herein again. In this embodiment of this application, the receiver compares a bit in the bit pattern of the first code block in the detection window 2 with a corresponding bit in the first template bit pattern, the receiver compares a bit in the bit pattern of the second code block in the detection window 2 with a corresponding bit in the second template bit pattern, to obtain a quantity of different bits. For a specific comparison manner, refer to the descriptions in FIG. 15. Details are not described herein again. In an example, if the obtained quantity of different bits is less than a threshold (for example, 2, which may be set based on an actual requirement, and is not limited in this application), that is, the first code block is the S code block, and the second code block is a non-D code block, it may be determined that the boundary of the encapsulated frame is found, the state machine enters the normal frame processing state in the locked state, and S 1010 is repeatedly performed. In another example, if at least one of the two obtained different quantities of bits is greater than or equal to a threshold, it may be determined that the boundary of the encapsulated frame is not found, that is, the first code block is not the S code.

For example, a detection window 3 is used to select a third code block, a fourth code block, and a fifth code block, and a length of the detection window 3 is greater than or equal to a sum of lengths of the third code block, the fourth code block, and the fifth code block. A to-be-identified bit pattern including the third code block, the fourth code block, and the fifth code block that are selected in the detection window 3 is matched with the third type of template bit pattern obtained through CL82 encoding, to detect whether the fourth code block is an S code. In this embodiment of this application, a synchronization header and a control block type field of the third code block, a synchronization header and a control block type field of the fourth code block, and a synchronization header of the fifth code block form the to-be-identified bit pattern. For example, the third type of template bit pattern includes the third template bit pattern, the fourth template bit pattern, and the fifth template bit pattern. For specific descriptions, refer to the foregoing descriptions. Details are not described herein again. In this embodiment of this application, the receiver compares a bit in a bit pattern of the third code block in the detection window 3 with a corresponding bit in the third template bit pattern, and compares a bit in a bit pattern of the fourth code block in the detection window 3 with a corresponding bit in the fourth template bit pattern, and the receiver compares a bit in a bit pattern of the fifth code block in the detection window 3 with a corresponding bit in the fifth template bit pattern, to obtain a quantity of different bits in to-be-identified bit pattern and the template bit pattern. For a specific comparison manner, refer to the descriptions in FIG. 15. Details are not described herein again. In an example, if the obtained quantity of different bits is less than a threshold (for example, 2, which may be set based on an actual requirement, and is not limited in this application), the third code block is a non-D and non-E code block, the fourth code block is an E code block, and the fifth code block is a D code block, it may be determined that the fourth code block (namely, the E code block) is the boundary of the encapsulated frame, the state machine enters the normal frame processing state in the locked state, and S 1010 is repeatedly performed. In another example, if at least one of the two obtained different quantities of bits is greater than or equal to a threshold, it may be determined that the boundary of the encapsulated frame is not found. It should be noted that, in this example, a case in which an E code is used as the boundary of the encapsulated frame may be caused by an S code encoding error or another reason; as a result, the original S code is encoded into the E code. In the enhanced framing manner in this embodiment of this application, a boundary code may be determined by identifying three adjacent code blocks, to avoid a framing failure caused by a bit error of the S code, and improve accuracy of boundary code block identification.

It should be noted that, the foregoing uses only an example in which a detection window in which CL82 encoding is performed is matched with a template for description. In another embodiment, if an interface of the receiver complies with CL49 encoding, a length of the detection window 1 is greater than or equal to a sum of lengths of the first code block and a sixth code block, and a length of the detection window 2 is greater than or equal to a sum of lengths of the first code block, the second code block, and the sixth code block. A length of the detection window 3 is greater than or equal to a sum of lengths of the third code block, the fourth code block, and the sixth code block. Correspondingly, the receiver detects the to-be-identified bit pattern in the corresponding detection window based on a template corresponding to CL49. For example, the receiver performs, based on the first type of template bit pattern in CL49, matching on a to-be-identified bit pattern including the first code block and the sixth code block in the detection window 1, and performs, based on the second type of template bit pattern in CL49, matching on a to-be-identified bit pattern including the first code block, the second code block, and the sixth code block in the detection window 2. In addition, the receiver performs, based on the third type of template bit pattern in CL49, matching on a to-be-identified bit pattern including the third code block, the fourth code block, and the sixth code block in the detection window 3. In an example, if the matching succeeds in the detection window 1, that is, the quantity of different bits is less than the threshold, the first code block is the S code, and the sixth code block is a D code. In another example, if the matching succeeds in the detection window 2, that is, the quantity of different bits is less than the threshold, the first code block is the S code, the second code block is the non-D code, and the sixth code block is a D code. In still another example, if the matching succeeds in the detection window 3, that is, the quantity of different bits is less than the threshold, the first code block is the non-D code block and the non-E code block, the fourth code block is the E code block, and the sixth code block is a D code block. For details that are not described, refer to the foregoing descriptions. Details are not described herein again.

Optionally, the receiver may perform detection in the specified search window based on at least one of the detection window 1, the detection window 2, and the detection window 3.

In this embodiment of this application, an example in which detection is performed using the sliding window in the specified search window based on the detection window 1, the detection window 2, and the detection window 3 is used for description. In other words, the detection window 1 to the detection window 3 operate in parallel. In this embodiment of this application, when the boundary of the encapsulated frame is detected in any detection window, it can be determined that the boundary of the encapsulated frame is found, to effectively improve efficiency and accuracy of searching for the boundary of the encapsulated frame, and avoid false identification caused by the bit error of the S code.

For example, if based on the detection window 1 to the detection window 3, no boundary of the encapsulated frame is found at a current location, the detection window 1 to the detection window 3 is slid backward by one code block in a code block sequence. To be specific, there is a distance of one code block between a left edge of each detection window after the detection window moves and a left edge of the detection window before the detection window moves, and detection is performed again, until a quantity of sliding times reaches a maximum quantity of sliding times, for example, 32 times (namely, a length of a code block included in the specified search window). If no boundary of the encapsulated frame is found in the specified search window after the detection window 1 to the detection window 3 are sequentially slid, S1013 is performed. If based on any one of the detection window 1 to the detection window 3, the boundary of the encapsulated frame is found in the specified search window, the receiver starts to count a quantity of frames. After receiving 198 code blocks, the receiver repeatedly performs S1010 starting from a 1^{st} identified non-I code (where for specific descriptions, refer to the foregoing descriptions, and details are not described herein again).

In this embodiment of this application, if the receiver finds the boundary of the encapsulated frame, the receiver may obtain a value of an MFI field of the encapsulated frame. The receiver compares an MFI value obtained last time with an MFI value obtained this time. In an example, if MFI values are consecutive, that is, when the receiver finds the boundary of the encapsulated frame and the MFI values are consecutive, S1010 is repeatedly performed. In another example, if the MFI values are non-consecutive, that is, although the receiver finds the boundary of the encapsulated frame, the MFI values are non-consecutive, the receiver increases the quantity of frame exceptions recorded by the counter by 1, and performs S1014.

1013: Output an encapsulated frame including invalid data, and increase the quantity of frame exceptions by 1.

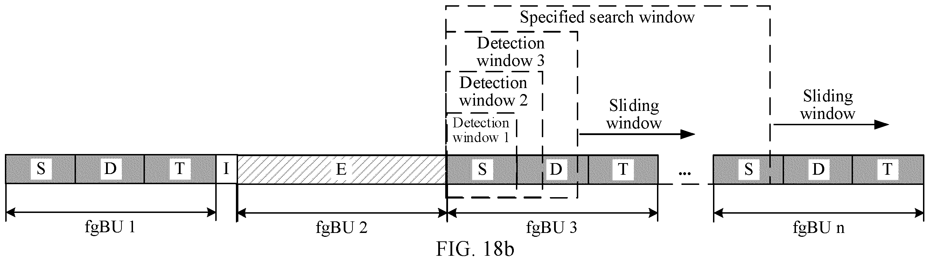

For example, as shown in FIG. 18b, if the receiver detects no boundary of the encapsulated frame in the specified search window, the receiver discards 198 (which depends on a quantity of code blocks included in the encapsulated frame, may be set based on an actual requirement, and is not limited in this application) code blocks starting from a start location of the specified search window. It should be noted that, the 198 discarded code blocks may cover one encapsulated frame, or may cover a plurality of encapsulated frames. This is not limited in this application.

For example, the receiver generates an encapsulated frame of a non-D code block such as an all-E code block or an all-I code block. The counter at the receiver records a case in which the quantity of frame exceptions is increased by 1, and S1011 is repeatedly performed. That is, the receiver slides the specified search window, and slides the specified search window to an end of the newly generated encapsulated frame, to detect a start boundary of the newly received encapsulated frame. A first code block of the newly received encapsulated frame may be an S code or another code block. This is not limited in this application. The receiver re-performs a searching operation in the specified window based on the foregoing procedure. In an example, if the receiver searches for the boundary of the encapsulated frame unsuccessfully again, the quantity of abnormality times is increased by 1 again. For example, currently, the quantity of frame exceptions is 2, and S1011 is repeatedly performed until the quantity of frame exceptions is greater than 3. That is, when the receiver is in the locked state, if the receiver searches for the boundary of the encapsulated frame unsuccessfully for the fourth time, S1001 is performed. Optionally, if for the encapsulated frame, the boundary of the encapsulated frame is found when the quantity of frame exceptions is 2 (which may alternatively be another value such as 1), S1010 is performed, that is, an original data encapsulated frame is output, and the quantity of frame exceptions is cleared.

1014: Determine whether the quantity of frame exceptions is greater than 3.

For example, the receiver detects, based on the quantity of frame exceptions recorded by the counter, whether the quantity of frame exceptions herein is greater than 3 (which may be protocol-specified, and is not limited in this application). It should be noted that, the quantity of frame exceptions is still a recorded quantity of consecutive frame exceptions, and a recording manner of the quantity of frame exceptions is similar to that of a quantity of frame locking times. That is, each time the boundary of the encapsulated frame is found, the quantity of frame exceptions is cleared.

In an example, if the receiver detects that the quantity of frame exceptions is greater than 3, S1001 is repeatedly performed. To be specific, the receiver determines that a transmission path is abnormal, the state machine is switched to the out-of-lock state, and the quantity of frame locking times is cleared.

In another example, if the receiver detects that the quantity of frame exceptions is less than or equal to 3, S1011 is repeatedly performed.

In a possible implementation, the receiver monitors a state of an upper-level pipe of a fine granularity pipe in real time. The upper-level pipe of the fine granularity pipe may be the second path in FIG. 4, or may be the bonding group in FIG. 4. For specific descriptions, refer to FIG. 4. This is not limited in this application. For example, if the receiver detects that the state of the upper-level pipe of the fine granularity pipe changes from a normal state to an abnormal state, for example, an abnormal state such as an interface fault. For a specific detection manner, refer to an embodiment in the conventional technology. This is not limited in this application. In this case, the receiver discards a received encapsulated frame, and generates an encapsulated frame of a non-D code block such as an LF code block, an I code block, or an E code block. For a specific generation manner, refer to the foregoing descriptions. Details are not described herein again. Correspondingly, the state machine is switched to the error frame processing state in the out-of-lock state, where a state of the state machine before switching may be the out-of-lock state or the locked state. In the error frame processing state, the receiver continuously outputs a received encapsulated frame as an encapsulated frame of a non-D code block such as an LF code block, an I code block, or an E code block. If the receiver detects that the state of the upper-level pipe is restored to the normal state, the state machine is switched to the initial frame searching state in the out-of-lock state, that is, S1001 is performed. It should be noted that, when the receiver performs any procedure in FIG. 10A and FIG. 10B, if the receiver detects that the state of the upper-level pipe is abnormal, the receiver performs processing according to the foregoing descriptions. Optionally, FIG. 19 is an example diagram of a code type of an LF code block. For related descriptions, refer to related content in a protocol. Details are not described herein.

In a possible implementation, embodiments of this application may be further applied to a vehicle-mounted Ethernet scenario. A vehicle-mounted Ethernet needs to carry a plurality of services. An ASN (Automotive Slicing Network) carries different vehicle-mounted services in a manner of slot hard slicing. Different hard slicing pipes can be established for different services, to avoid a case in which the services compete for bandwidth resources, ensure a service bandwidth, and implement deterministic low-latency transmission. In addition, a requirement of a vehicle-mounted latency-sensitive service is satisfied, a packet loss caused by congestion is avoided, and highly reliable vehicle-mounted Ethernet is implemented with reference to an ASN reliability technology. The vehicle-mounted Ethernet provides reliable deterministic low-latency communication capabilities for vehicle-mounted subsystems such as an ECU, a sensor, a camera, a lidar, a millimeter-wave radar, an MDC, a VDC, a VIU, and a T-Box.

An interface of a vehicle-mounted network based on the ASN includes a conventional vehicle-mounted bus interface such as a CAN/LIN bus interface, and mainly includes an Ethernet interface in the IEEE 802.3 standard. Conventional Ethernet twisted-pair copper interfaces included in the ASN include interfaces such as 10BASE-T, 100BASE-T, 1000BASE-T, 2.5GBASE-T, 5GBASE-T, 10GBASE-T, and 25GBASE-T; and vehicle-mounted Ethernet dedicated twisted-pair copper interfaces include interfaces such as 10BASE-T1S, 100BASE-T1, 1000BASE-T1, 2.5GBASE-T1, 5GBASE-T1, 10GBASE-T1, and 25GBASE-T1 (where standards are still being developed). In some scenarios, vehicle-mounted Ethernet dedicated optical interfaces including 1000BASE-RHC, 2.5GBASE-AU, 5GBASE-AU, 10GBASE-AU, 25GBASE-AU, and 50GBASE-AU, and conventional Ethernet optical interfaces such as 10GBASE-SR/LR are further included. Currently, Ethernet interfaces that are applicable to the ASN vehicle-mounted network mainly include: a 1 GE interface, a 2.5 GE interface, a 5 GE interface, a 10 GE interface, and a 25 GE interface. The ASN implements channelization at a granularity of N* 10 Mbps for a network-side interface based on an Ethernet hard private line. In addition, low-speed Ethernet interfaces (10 Mbps, 100 Mbps, 1000 Mbps, and 2.5 Gbps) can be introduced based on interfaces such as QSGMII and FlexMII.

In the vehicle-mounted Ethernet scenario, as described above, an interface of the vehicle-mounted Ethernet may be a low-speed Ethernet interface such as a GE interface. For the low-speed Ethernet interface such as the GE interface, a PCS bitstream at a physical PHY layer is encoded based on a character granularity of 8B/10B. An encoding rule is described in FIG. 7a and FIG. 7b, and details are not described herein again. In an encoding scenario at the character granularity of 8B/10B, an fgBU may be referred to as an APDU in this scenario. Searching for an encapsulation boundary of the APDU depends on searching for consecutive preambles, an SFD, and a ~SFD on a GMII interface. Specifically, the receiver may still perform the procedure in FIG. 10A and FIG. 10B. When performing the step of searching for the encapsulation boundary, a length of a detection window on which the receiver is based is greater than or equal to a sum of lengths of a seventh code block, an eighth code block, and a ninth code block. A template bit pattern that may be preset by the receiver includes a seventh template bit pattern, an eighth template bit pattern, and a ninth template bit pattern. For example, as shown in FIG. 20, the seventh template bit pattern includes a bit corresponding to a preamble in FIG. 7a, and the eighth template bit pattern includes a bit corresponding to an SFD in FIG. 7a. The ninth template bit pattern includes a non-SFD (namely, the ~SFD). In an example, if the receiver detects the preamble and an SFD character, it is determined that a next byte is a start boundary of the APDU, namely, a first byte of the APDU. In another example, if the receiver detects the preamble and a ~SFD character, and there is one character between the preamble and the ~SFD character, it is determined that the ~SFD character is a first byte (namely, a start boundary) of the APDU. In still another example, if the receiver detects an SFD character and a ~SFD character, it is determined that the ~SFD is a first byte (namely, a start boundary) of the APDU. In other words, in this example, if the receiver detects two characters in the preamble, the SFD, and the ~SFD, the start boundary of the APDU may be determined. It should be noted that, when the receiver performs the procedure in FIG. 10A and FIG. 10B in the encoding scenario at the character granularity of 8B/10B, a difference from the procedure in FIG. 10A and FIG. 10B lies in that when detecting a boundary of an encapsulated frame, the receiver performs searching in both an out-of-lock state and a locked state in a matching manner in FIG. 20. For a part that is not described, refer to FIG. 10A and FIG. 10B. Details are not described herein again.

It should be noted that, both the fgBU and the APDU in embodiments of this application support CL49 encoding and CL82 encoding.

The following describes a communication apparatus provided in embodiments of this application.

FIG. 21 is a diagram of a structure of a communication apparatus according to an embodiment of this application. The communication apparatus may be configured to perform the method described in the foregoing method embodiments. For example, the communication apparatus may be any form of a switch (or referred to as a switching device, a switching chip, or the like), a router, a network adapter, or the like. A specific form of the communication apparatus is not described in this embodiment of this application. As shown in FIG. 21, the communication apparatus includes a processing unit 2101 and a transceiver unit 2102.

The transceiver unit 2102 is configured to obtain a code block stream, where the code block stream includes a plurality of code blocks;
the processing unit 2101 is configured to determine a to-be-identified bit pattern, where the to-be-identified bit pattern includes a bit pattern corresponding to an (i-1)^{th} code block, a bit pattern corresponding to an i^{th} code block, and a bit pattern corresponding to an (i+1)^{th} code block, the (i-1)^{th} code block, the i^{th} code block, and the (i+1)^{th} code block belong to the plurality of code blocks, the i^{th} code block and the (i-1)^{th} code block are adjacent code blocks, and the i^{th} code block and the (i+1)^{th} code block are adjacent code blocks; and
the processing unit 2101 is configured to determine the i^{th} code block as a start boundary code block based on the to-be-identified bit pattern and a first template bit pattern, where the first template bit pattern includes a first bit pattern, a second bit pattern, and a third bit pattern, a bit pattern of the (i-1)^{th} code block conforms to the first bit pattern, a bit pattern of the i^{th} code block conforms to the second bit pattern, and a bit pattern of the (i+1)^{th} code block conforms to the third bit pattern.

It may be understood that, for other functions, steps, or the like of the transceiver unit and the processing unit, refer to the foregoing method embodiments. Details are not listed one by one herein.

Division into the modules in embodiments of this application is an example; and is merely logical function division, and may be other division during actual implementation. In addition, functional modules or units in embodiments of this application may be integrated into one processor, or each of the modules or units may exist alone physically, or two or more of the modules or units may be integrated into one module or unit. The integrated module or unit may be implemented in a form of hardware, or may be implemented in a form of a software functional module.

The foregoing describes the communication apparatus in this embodiment of this application. The following describes a possible product form of the communication apparatus. It should be understood that a product in any form that has a function of the communication apparatus in FIG. 21 falls within the protection scope of embodiments of this application. It should be further understood that the following descriptions are merely examples, and do not limit a product form of the communication apparatus in embodiments of this application.

In another example, FIG. 22 is a block diagram of a communication apparatus 2200 according to an embodiment of this application. The communication apparatus may include a processor 2201 and a transceiver/transceiver pin 2202, and optionally, further include a memory 2203. The processor 2201 may be configured to perform steps performed by the communication apparatus in the foregoing method embodiments, and control a receiver pin to receive a signal, and control a transmitter pin to send a signal.

Components of the communication apparatus 2200 are coupled together through a bus 2204. In addition to a data bus, the bus system 2204 further includes a power bus, a control bus, and a status signal bus. However, for clear descriptions, various types of buses in the figure are marked as the bus system 2204.

Optionally, the memory 2203 may be configured to store instructions in the foregoing method embodiments.

It should be understood that, the communication apparatus 2200 in this embodiment of this application may correspond to the receiver in the methods in the foregoing embodiments, and the foregoing and other management operations and/or functions of the elements in the communication apparatus 2200 are separately intended to implement corresponding steps in the foregoing methods. For brevity, details are not described herein.

All related content of the steps in the foregoing method embodiments may be cited in function descriptions of corresponding functional modules, and details are not described herein again.

Based on a same technical idea, an embodiment of this application further provides a computer-readable storage medium. The computer-readable storage medium stores a computer program, the computer program includes at least one segment of code, and the at least one segment of code may be executed by a communication apparatus, to control the communication apparatus to implement the foregoing method embodiments.

Based on a same technical idea, an embodiment of this application further provides a computer program. When the computer program is executed by a communication apparatus, the foregoing method embodiments are implemented.

A part or all of the program may be stored in a storage medium encapsulated with a processor, or a part or all of the program may be stored in a memory that is not encapsulated with a processor.

Based on a same technical idea, an embodiment of this application further provides a processor. The processor is configured to implement the foregoing method embodiments. The processor may be a chip.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (Random Access Memory, RAM), a flash memory, a read only memory (Read Only Memory, ROM), an erasable programmable read only memory (Erasable Programmable ROM, EPROM), an electrically erasable programmable read only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may also be a component of the processor. The processor and the storage medium may be disposed in an ASIC. In addition, the ASIC may be located in a network device. Certainly, the processor and the storage medium may alternatively exist as discrete components in a network device.

A person skilled in the art should be aware that, in one or more of the foregoing examples, the functions described in embodiments of this application may be implemented by using hardware, software, firmware, or any combination thereof. When the functions are implemented by using software, the functions may be stored in a computer-readable medium or transmitted as one or more instructions or code on a computer-readable medium. The computer-readable medium includes a computer storage medium and a communication medium, where the communication medium includes any medium that facilitates transmission of a computer program from one place to another. The storage medium may be any available medium accessible to a general-purpose or dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

## Claims

1. A code block identification method, comprising:
obtaining a code block stream, wherein the code block stream comprises a plurality of code blocks;
determining a to-be-identified bit pattern, wherein the to-be-identified bit pattern comprises a bit pattern corresponding to an (i-1)^{th} code block, a bit pattern corresponding to an i^{th} code block, and a bit pattern corresponding to an (i+1)^{th} code block, the (i-1)^{th} code block, the i^{th} code block, and the (i+1)^{th} code block belong to the plurality of code blocks, the i^{th} code block and the (i-1)^{th} code block are adjacent code blocks, and the i^{th} code block and the (i+1)^{th} code block are adjacent code blocks; and
determining the i^{th} code block as a start boundary code block based on the to-be-identified bit pattern and a template bit pattern, wherein the template bit pattern comprises a first bit pattern, a second bit pattern, and a third bit pattern, the bit pattern of the (i-1)^{th} code block conforms to the first bit pattern, the bit pattern of the i^{th} code block conforms to the second bit pattern, and the bit pattern of the (i+1)^{th} code block conforms to the third bit pattern.

2. The method according to claim 1, wherein the first bit pattern indicates that a corresponding code block is a non-data code block and a non-error code block, the second bit pattern indicates that a corresponding code block is an error code block, and the third bit pattern indicates that a corresponding code block is a data code block.

3. The method according to claim 2, wherein the first bit pattern comprises a synchronization header of a first code block and a control block type field of a second code block, the first code block is a non-data code block, and the second code block is a non-error code block.

4. The method according to claim 2, wherein the second bit pattern comprises a synchronization header and a control block type field of a third code block, and the third code block is an error code block.

5. The method according to claim 2, wherein the third bit pattern comprises a synchronization header of a fourth code block, and the fourth code block is a data code block.

6. The method according to any one of claims 1 to 5, wherein the bit pattern of the (i-1)^{th} code block comprises a synchronization header and a control block type field of the (i-1)^{th} code block, the bit pattern of the i^{th} code block comprises a synchronization header and a control block type field of the i^{th} code block, and the bit pattern of the (i+1)^{th} code block comprises a synchronization header of the (i+1)^{th} code block.

7. The method according to any one of claims 1 to 6, wherein the bit pattern of the (i-1)^{th} code block comprises the synchronization header and the control block type field of the (i-1)^{th} code block, the bit pattern of the i^{th} code block comprises the synchronization header and the control block type field of the i^{th} code block, and the bit pattern of the (i+1)^{th} code block comprises the synchronization header and four least significant bytes of the (i+1)^{th} code block.

8. The method according to any one of claims 1 to 7, wherein the determining the i^{th} code block as a first boundary code block based on the to-be-identified bit pattern and a template bit pattern comprises:
comparing the to-be-identified bit pattern with the template bit pattern, to obtain a quantity of inconsistent bits; and
if the quantity of inconsistent bits is less than or equal to a preset threshold, determining the i^{th} code block as the first boundary code block.

9. The method according to claim 8, wherein the comparing the to-be-identified bit pattern with the template bit pattern, to obtain a quantity of inconsistent bits comprises:
comparing the bit pattern of the (i-1)^{th} code block with the first bit pattern, comparing the bit pattern of the i^{th} code block with the second bit pattern, and comparing the bit pattern of the (i+1)^{th} code block with the third bit pattern.

10. The method according to claim 6, wherein a first code block stream complies with a CL82 encoding rule.

11. The method according to claim 7, wherein a first code block stream complies with a CL82 encoding rule.

12. The method according to any one of claims 1 to 11, wherein after the determining the i^{th} code block as a first boundary code block based on the to-be-identified bit pattern and a template bit pattern, the method further comprises:
determining a target code group from the code block stream based on the i^{th} code block, wherein the i^{th} code block is a start boundary code block in the target code group.

13. A communication apparatus, comprising:
one or more processors;
a memory; and
one or more computer programs, wherein the one or more computer programs are stored in the memory; and when the computer program is executed by the one or more processors, the communication apparatus is enabled to perform the following steps:
obtaining a code block stream, wherein the code block stream comprises a plurality of code blocks;
determining a to-be-identified bit pattern, wherein the to-be-identified bit pattern comprises a bit pattern corresponding to an (i-1)^{th} code block, a bit pattern corresponding to an i^{th} code block, and a bit pattern corresponding to an (i+1)^{th} code block, the (i-1)^{th} code block, the i^{th} code block, and the (i+1)^{th} code block belong to the plurality of code blocks, the i^{th} code block and the (i-1)^{th} code block are adjacent code blocks, and the i^{th} code block and the (i+1)^{th} code block are adjacent code blocks; and
determining the i^{th} code block as a start boundary code block based on the to-be-identified bit pattern and a template bit pattern, wherein the template bit pattern comprises a first bit pattern, a second bit pattern, and a third bit pattern, the bit pattern of the (i-1)^{th} code block conforms to the first bit pattern, the bit pattern of the i^{th} code block conforms to the second bit pattern, and the bit pattern of the (i+1)^{th} code block conforms to the third bit pattern.

14. The apparatus according to claim 13, wherein the first bit pattern indicates that a corresponding code block is a non-data code block and a non-error code block, the second bit pattern indicates that a corresponding code block is an error code block, and the third bit pattern indicates that a corresponding code block is a data code block.

15. The apparatus according to claim 14, wherein the first bit pattern comprises a synchronization header of a first code block and a control block type field of a second code block, the first code block is a non-data code block, and the second code block is a non-error code block.

16. The apparatus according to claim 14, wherein the second bit pattern comprises a synchronization header and a control block type field of a third code block, and the third code block is an error code block.

17. The apparatus according to claim 14, wherein the third bit pattern comprises a synchronization header of a fourth code block, and the fourth code block is a data code block.

18. The apparatus according to any one of claims 13 to 17, wherein the bit pattern of the (i-1)^{th} code block comprises a synchronization header and a control block type field of the (i-1)^{th} code block, the bit pattern of the i^{th} code block comprises a synchronization header and a control block type field of the i^{th} code block, and the bit pattern of the (i+1)^{th} code block comprises a synchronization header of the (i+1)^{th} code block.

19. The apparatus according to any one of claims 13 to 18, wherein the bit pattern of the (i-1)^{th} code block comprises the synchronization header and the control block type field of the (i-1)^{th} code block, the bit pattern of the i^{th} code block comprises the synchronization header and the control block type field of the i^{th} code block, and the bit pattern of the (i+1)^{th} code block comprises the synchronization header and four least significant bytes of the (i+1)^{th} code block.

20. The apparatus according to any one of claims 13 to 19, wherein when the computer program is executed by the one or more processors, the communication apparatus is enabled to perform the following steps:
comparing the to-be-identified bit pattern with the template bit pattern, to obtain a quantity of inconsistent bits; and
if the quantity of inconsistent bits is less than or equal to a preset threshold, determining the i^{th} code block as the first boundary code block.

21. The apparatus according to claim 20, wherein when the computer program is executed by the one or more processors, the communication apparatus is enabled to perform the following steps:
comparing the bit pattern of the (i-1)^{th} code block with the first bit pattern, comparing the bit pattern of the i^{th} code block with the second bit pattern, and comparing the bit pattern of the (i+1)^{th} code block with the third bit pattern.

22. The apparatus according to claim 18, wherein a first code block stream complies with a CL82 encoding rule.

23. The apparatus according to claim 19, wherein a first code block stream complies with a CL82 encoding rule.

24. The apparatus according to any one of claims 13 to 23, wherein when the computer program is executed by the one or more processors, the communication apparatus is enabled to perform the following step:
determining a target code group from the code block stream based on the i^{th} code block, wherein the i^{th} code block is a start boundary code block in the target code group.

25. A computer storage medium, comprising computer instructions, wherein when the computer instructions are run on a communication apparatus, the communication apparatus is enabled to perform the method according to any one of claims 1 to 12.

26. A computer program product, wherein when the computer program product is run on a computer, the computer is enabled to perform the method according to any one of claims 1 to 12.

27. A chip, comprising one or more interface circuits and one or more processors, wherein the interface circuit is configured to receive a signal from a memory of a communication apparatus, and send the signal to the processor, wherein the signal comprises computer instructions stored in the memory; and when the processor executes the computer instructions, the communication apparatus is enabled to perform the method according to any one of claims 1 to 12.
